**Europäisches Patentamt**

**European Patent Office**

**Office européen des brevets**

(19)

(11) **EP 1 580 737 A2**

(12) **EUROPEAN PATENT APPLICATION**

(43) Date of publication:
   28.09.2005 Bulletin 2005/39

(51) Int Cl.[7]: **G11B 7/125**

(21) Application number: 05102041.0

(22) Date of filing: 15.03.2005

(84) Designated Contracting States:
   **AT BE BG CH CY CZ DE DK EE ES FI FR GB GR HU IE IS IT LI LT LU MC NL PL PT RO SE SI SK TR**
   Designated Extension States:
   **AL BA HR LV MK YU**

(30) Priority: 19.03.2004 JP 2004081028

(71) Applicant: **Konica Minolta Opto, Inc.**
   **Tokyo 192-8505 (JP)**

(72) Inventors:
   • **Nomura, Eiji, c/o Konica Minolta Opto, Inc.**
     **Tokyo 192-8505 (JP)**
   • **Hashimura, Junji, c/o Konica Minolta Opto, Inc.**
     **Tokyo 192-8505 (JP)**
   • **Kimura, Tohru, c/o Konica Minolta Opto, Inc.**
     **Tokyo 192-8505 (JP)**
   • **Noguchi, Kazutaka, c/o Konica Minolta Opto, Inc.**
     **Tokyo 192-8505 (JP)**

(74) Representative: **Henkel, Feiler & Hänzel**
   **Möhlstrasse 37**
   **81675 München (DE)**

(54) **Objective optical system of optical pick-up, optical pick-up device and optical information recording/reproducing apparatus**

(57)   An objective optical system for use in an optical pickup apparatus, comprises an aberration correcting element having at least two phase structures of a first and second phase structures; and a light converging element to converge the first light flux emitted from the aberration correcting element onto an information recording plane of the first optical disk and to converge the second light flux emitted from the aberration correcting element onto an information recording plane of the second optical disk;

wherein the second phase structure refrains at least one of a change in the light converging characteristic of the objective optical system due to a change in the wavelength of the first light flux and a change in the light converging characteristic of the objective optical system due to a change in environmental temperature.

FIG. 5

**Description**

**BACKGROUND OF THE INVENTION**

The present invention relates to an objective optical system of optical pick up, an optical pick-up device and an optical information recording/reproducing apparatus, which are capable of reproducing and/or recording information from/onto plural kinds of optical disks.

Conventionally, there has been well-known a compatible optical pick-up device being capable of recording/reproducing information onto/from plural kinds of optical disks, recording densities of which are different from each other. For instance, there has been available in the market an optical pick-up device for recording/reproducing information onto/from both the DVD (Digital Versatile Disk) and the CD (Compact Disk). Further, in recent years, it has been increasingly demanded in the market that the optical pick-up device is compatible with high-density optical disk HD employing a blue-violet laser light source (for instance, a blue-violet semiconductor laser diode, a blue-violet SHG laser, etc.) (Hereinafter, the optical disk employing the blue-violet laser light source as a laser light source for recording/reproducing use is called "high-density optical disk HD" as a general term), the conventional DVD, and further, the CD, as the optical disks, recording densities of which are different from each other.

Further, considering the variation of the wavelengths of light emitted from the laser light source, it is desirable that the chromatic aberration is as small as possible in both a region in the vicinity of the wavelength employed for high-density optical disk HD and another region in the vicinity of the wavelength employed for the DVD. Specifically, since the wavelength of the light beam employed for high-density optical disk HD resides within a blue-violet color region and the wavelength-dispersion of the lens material is relatively large in the blue-violet color region, the correction of the chromatic aberration is indispensable for high-density optical disk HD. Still further, since a variation amount of spherical aberration per unit wavelength and a variation amount of spherical aberration associated with the environmental temperature variation increase in proportion to NA (Numerical Aperture) to the fourth power, the abovementioned problem would become still more tangible in the objective optical system of 0.85 NA such as the Blue-ray Disk being one of the standards of high-density optical disk HD.

The abovementioned problem, in regard to the variation amount of spherical aberration per unit wavelength and the variation amount of spherical aberration associated with the environmental temperature variation, can be relieved by adding a diffractive structure to the objective optical system. However, since established is a trade-off relationship between the variation amount of spherical aberration per unit wavelength and the other variation amount of spherical aberration associated with the environmental temperature variation, they are incompatible with each other. Accordingly, it is necessary to reduce the total amount of the variation amount of spherical aberration per unit wavelength and the other variation amount of spherical aberration associated with the environmental temperature variation, by introducing another parameter.

Further, the reduction of the difference between the magnifying power for high-density optical disk HD and the other magnifying power for the DVD will contribute to the simplification of the optical pick-up device.

There has been well-known a technology of employing the diffractive structure formed on an optical surface for the objective optical system of the compatible optical pick-up device being capable of recording/reproducing information onto/from plural kinds of optical disks, recording densities of which are different from each other (for instance, set forth in Patent Document 1).

Disclosed in Patent Document 1 is the technology with respect to the objective optical system provided with two groups and the diffractive structure serving as a phase structure and commonly usable for high-density optical disk HD, the DVD and the CD. According to this objective optical system provided with the two-groups structure, the working distance for the optical disk having a thicker protective layer, such as the DVD, the CD, etc., is secured by loading almost of the optical power in the vicinity of the optical axis onto the condenser element located at the light source side, and the eclipse of light beam caused by the stepwise portion of the diffractive structure is prevented by forming the diffractive structure, serving as a phase structure, on the aberration correcting element located at the light source side, so as to improve the transmittance of the system.

[Patent Document 1]

EPC 1304689 (European Non-Examined Patent Publication)

Patent Document 1 sets forth the description with respect to the phase structure for correcting the spherical aberrations caused by thickness differences between protective layers of various kinds of optical discs and caused by differences between wavelengths to be employed for various kinds of optical discs. However, other than the phase structure for correcting the spherical aberrations caused by the thickness differences between the protective layers of various kinds of the optical discs and caused by the differences between the wavelengths to be employed for various kinds of the optical discs, Patent Document 1 fails to disclose another phase structure for suppressing a change of convergence characteristic associated with the environmental temperature change and another change of convergence characteristic caused by the wavelength change in the blue-violet wavelength range to be utilized for high-density optical disk HD. Further, Patent Document 1 also fails to disclose the description with respect to the objective optical system provided with the two-groups structure that designates the paraxial power ratio of two lenses, which is optimum for suppressing a change of convergence characteristic associated with the environmental temperature change and another change of convergence characteristic caused by the wavelength change in the blue-violet wavelength range.

Further, since a refractive power for converging the light beam, incident onto an information-recording surface of the optical disc, is required for the objective optical system, when the objective optical system is configured by a single lens, a curvature of an optical surface of the single lens is obliged to increase to a large curvature. Accordingly, it has been a problem that, from a viewpoint of the lens manufacturing process, it is difficult to form the diffractive structure on the optical surface having such a large curvature.

## SUMMARY OF THE INVENTION

To overcome the abovementioned drawbacks in conventional objective optical systems, it is an object of the present invention to provide an objective optical system to be employed for an optical pick-up device, an optical pick-up device and an optical information recording/reproducing apparatus, each of which makes it possible to record information onto various kinds of optical discs having different recording densities in a state of sufficiently correcting the spherical aberration, and further, which makes it possible to simplify the lens manufacturing process.

In the present specification, the term of "high-density optical disk HD" represents an optical disc, which employs the blue-violet semiconductor laser diode or the blue-violet SHG laser as the light source for recording/reproducing information, as its general name, and includes not only an optical disc (such as a Blue-ray Disc), in a specification of which the thickness of the protective layer is specified at about 0.1 mm, but also such an optical disc (such as a HD, a DVD) that is employed for information recording/reproducing operations using the objective optical system, NA of which is in a range of 0.65 - 0.67, and that the thickness of its protective layer is specified at about 0.6 mm in its specification. Further, other than such the optical disc having the abovementioned protective layer over its information recording surface, "high-density optical disk HD" also includes an optical disc having the protective layer, whose thickness is in a range of several - several-ten nm, over its information recording surface, and an optical disc having the protective layer or the protective film, whose thickness is zero, over its information recording surface. Still further, high-density optical disk HD defined in the present specification also includes a Magneto-Optical disc, which employs the blue-violet semiconductor laser diode or the blue-violet SHG laser as the light source for recording/reproducing information.

Further, the term of the "DVD" specified in the present specification is a generic name for optical discs in the DVD series including the DVD-ROM, the DVD-Video, the DVD-Audio, the DVD-RAM, the DVD-R, the DVD-RW, the DVD+R, the DVD+RW, etc., and the term of the "CD" specified in the present specification is a generic name for optical discs in the CD series including the CD-ROM, the CD-Video, the CD-Audio, the CD-R, the CD-RW, etc.

Still further, in the present specification, the term of the "objective optical system" represents a lens group constituted by a light converging element, which is disposed at a position opposite to the optical disc in the optical pick-up device and which has a function of converging the laser beams, having wavelengths different from each other and emitted from the light sources, onto the information recording surfaces of the optical discs having recording densities different from each other, respectively, and an optical element integrated with the light converging element and driven in tracking and focusing directions by an actuator.

Still further, the term of the "numerical aperture" specified in the present specification indicates a numerical aperture specified in an optical disc specifications, or the image-side numerical aperture of the objective optical system, which has such a diffraction limit efficiency that the spot diameter necessary for conducting information recording/reproducing operations for the optical disc can be acquired.

Accordingly, to overcome the cited shortcomings, the abovementioned object of the present invention can be attained by objective optical systems described as follows.

An objective optical system for use in an optical pickup apparatus, conducting at least one of reproducing and recording information for a first optical disk having a protective layer with a thickness t1 by using a first light flux with a wavelength λ1 emitted from a first light source and conducting at least one of reproducing and recording information for a second optical disk having a protective layer with a thickness t2 by using a second light flux with a wavelength λ2 emitted from a second light source, comprises:

an aberration correcting element having at least two phase structures of a first and second phase structures; and
a light converging element to converge the first light flux emitted from the aberration correcting element onto an information recording plane of the first optical disk and to converge the second light flux emitted from the aberration correcting element onto an information recording plane of the second optical disk;

wherein the second phase structure refrains at least one of a change in the light converging characteristic of the objective optical system due to a change in the wavelength of the first light flux and a change in the light converging characteristic of the objective optical system due to a change in environmental temperature.

**BRIEF DESCRIPTION OF THE DRAWINGS**

Other objects and advantages of the present invention will become apparent upon reading the following detailed description and upon reference to the drawings in which:

Fig. 1(a) and Fig. 1(b) show cross sectional schematic diagrams of exemplified diffractive structures;
Fig. 2(a) and Fig. 2(b) show cross sectional schematic diagrams of exemplified diffractive structures;
Fig. 3(a) and Fig. 3(b) show cross sectional schematic diagrams of exemplified diffractive structures;
Fig. 4(a) and Fig. 4(b) show cross sectional schematic diagrams of exemplified diffractive structures and optical-path difference providing structures;
Fig. 5 shows a schematic diagram of a configuration of an optical pick-up device;
Fig. 6 shows a cross sectional schematic diagram of a configuration of an objective optical system; and
Fig. 7 shows a graph of a wave front aberration in an example, when the environment temperature rises by 30 °C.

**DETAILED DESCRIPTION OF THE PREFERRED EMBODIMENT**

Firstly, to overcome the abovementioned problems, other preferable embodiment will be described as follows:

(1) An objective optical system used for an optical pick-up device, characterized in that
in the objective optical system used for an optical pick-up device, which conducts information recording and/ or reproducing operations for a first optical disc having a protective layer of thickness t1 by using a first laser beam of wavelength $\lambda1$ emitted from a first light source, and conducts information recording and/or reproducing operations for a second optical disc having a protective layer of thickness t2 (t2 $\geq$ t1) by using a second laser beam of wavelength $\lambda2$ ($\lambda2 \geq \lambda1$) emitted from a second light source,
the objective optical system is constituted by at least two optical elements including an aberration correcting element, which has at least two phase structures including a first phase structure and a second phase structure, and a light converging element, which has a function of converging the first laser beam emitted from the aberration correcting element onto an information recording surface of the first optical disc, and has a function of converging the second laser beam emitted from the aberration correcting element onto an information recording surface of the second optical disc, and
when a paraxial power of the aberration correcting element for the first laser beam, a paraxial power of the light converging element for the first laser beam, a magnification factor of the objective optical system for recording and/or reproducing the information onto/from the first optical disk, and a magnification factor of the objective optical system for recording and/or reproducing the information onto/from the second optical disc, are denoted as P1 (mm$^{-1}$), P2 (mm$^{-1}$), m1 and m2, respectively, the objective optical system fulfills equations (1) and (2) shown as follow.

$$-0.05 \leq P1 / P2 \leq 0.30 \tag{1}$$

$$0 \leq | \, |m1| - |m2| \, | \leq 0.05 \tag{2}$$

Incidentally, in the present invention, paraxial power (mm$^{-1}$) is represented by the following formula:

$$P1 = 1/f1$$

$$P2 = 1/f2$$

Where f1 is a focal length (mm) of the aberration correcting element for the first light flux and f is a focal length (mm) of the light converging element for the first light flux.

(2) The objective optical system used for the optical pick-up device, recited in claim 1, characterized in that

the first phase structure corrects a spherical aberration caused by a difference between thickness t1 and thickness t2, and the second phase structure has a function for suppressing a change of light converging characteristics of the objective optical system, which occurs associated with a wavelength change of the first laser beam, and/or a change of light converging characteristics, which occurs associated with a change of an environmental temperature.

(3) The objective optical system used for the optical pick-up device, recited in claim 1, characterized in that

the first phase structure corrects a spherical aberration caused by a wavelength difference between the first laser beam and the second laser beam, both of which enter into the first phase structure, and the second phase structure has a function for suppressing a change of light converging characteristics of the objective optical system, which occurs associated with a wavelength change of the first laser beam, and/or a change of light converging characteristics, which occurs associated with a change of an environmental temperature.

According to item 1, since the objective optical system is constituted by at least two optical elements including the aberration correcting element, which has at least two phase structures including the first phase structure and the second phase structure, and the light converging element, and the paraxial powers of the aberration correcting element and the light converging element and the magnification factors of the objective optical system are established so as to fulfill equations (1) and (2), it becomes possible to provide an objective optical system, which makes it possible to record information onto various kinds of optical discs having different recording densities in a state of sufficiently correcting the spherical aberration.

As described in item 2, for instance, when the optical disc (such as the Blue-ray Disc), in the specification of which the thickness of the protective layer is specified at about 0.1 mm, is employed as the first optical disc, the first phase structure makes it possible to correct the spherical aberration caused by the difference between thickness t1 and thickness t2, and the second phase structure makes it possible to suppress the change of light converging characteristics of the objective optical system, which occurs associated with the wavelength change of the first laser beam, and/or the change of light converging characteristics, which occurs associated with the change of the environmental temperature.

Further, as described in item 3, for instance, when the optical disc (such as the HD-DVD), in the specification of which the thickness of the protective layer is specified at about 0.6 mm, is employed as the first optical disc, the first phase structure makes it possible to correct the spherical aberration caused by the wavelength difference between the first laser beam and the second laser beam, both of which enter into the first phase structure, and the second phase structure makes it possible to suppress the change of light converging characteristics of the objective optical system, which occurs associated with the wavelength change of the first laser beam, and/or the change of light converging characteristics, which occurs associated with the change of the environmental temperature.

Still further, since the refractive power for the incident laser beam is given exclusively to light converging element L2 disposed directly opposite to the optical disc, it becomes possible to maintain a sufficient working distance for the DVD.

Yet further, since the curvatures of the incident surface and the emission surface of the aberration correcting element become small, and therefore, both the surfaces can be formed in substantially a flat shape, the stepwise portions of the first phase structure and the second phase structure, both of which are respectively formed on the incident surface and the emission surface, shut out the traveling path of the laser beam, and therefore, it is possible to minimize the ratio of a laser beam portion, which does not contribute for forming a converged light spot. Accordingly, it becomes possible to prevent the objective optical system from deteriorating its transmittance, resulting in an easiness of the lens manufacturing process, compared to the case in which the phase structure is formed on the optical surface having a large curvature.

(4) The objective optical system used for the optical pick-up device, recited in item 2 or item 3, characterized in that

each of the first phase structure and the second phase structure is any one of: a wavelength-selective diffractive structure in which a plurality of ring-shaped zones are arranged in a pattern of concentric circles and each of the plurality of ring-shaped zones is divided stepwise into discontinuous steps in a direction of an optical axis so as to give substantially a phase difference to the second laser beam without giving substantially no phase difference to the first laser beam; an optical-path difference adding structure constituted by a plurality of ring-shaped zones, each of which is divided into steps in a direction of the optical axis, arranged in a pattern of concentric circles; and the different-order diffractive structure in which a plurality of ring-shaped zones are arranged in a pattern of concentric circles and which fulfills n1 > n2, when a diffraction order of a diffracted light ray having a maximum diffraction efficiency, among diffracted light rays generated by the first laser beam incident to the ring-shaped zones, is defined as n1, while a diffraction order of a diffracted light ray having a maximum diffraction efficiency, among diffracted light rays generated by the second laser beam incident to the ring-shaped zones, is defined as n2.

As described in item 4, it is applicable that each of the first phase structure and the second phase structure is any one of the wavelength-selective diffractive structure, the optical-path difference adding structure and the different-order diffractive structure.

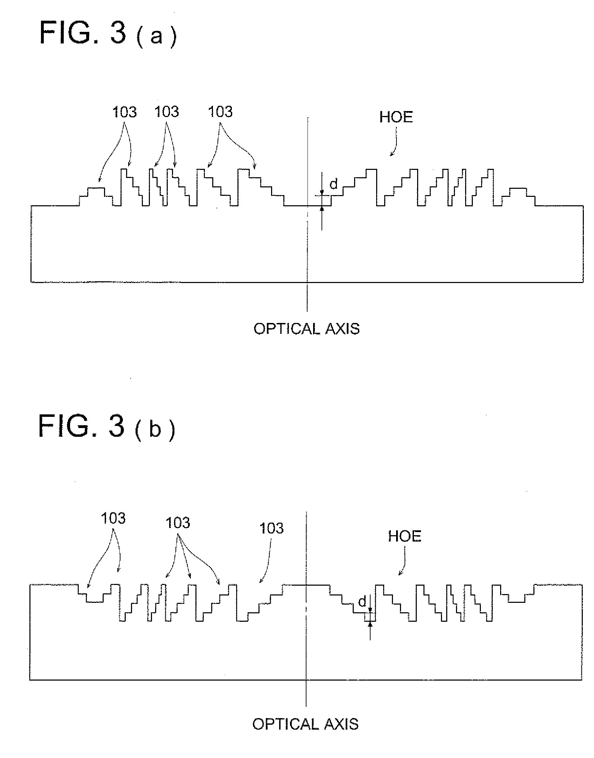

As schematically shown in Fig. 3(a) and Fig. 3(b), in the "wavelength-selective diffractive structure" (hereinafter, referred to as wavelength-selective diffractive structure HOE) described in the present specification, a plurality of ring-shaped zones are arranged in a pattern of concentric circles, and each of the plurality of ring-shaped zones is divided into discontinuous steps in a direction of the optical axis. By appropriately setting depth d ($\mu$m) of the step structure and number of steps N, for instance, wavelength-selective diffractive structure HOE will not give any phase difference to the first laser beam of wavelength $\lambda 1$ so that the first laser beam penetrates through structure HOE as it is, while will give a phase difference to the second laser beam of wavelength $\lambda 2$ so as to diffract the second laser beam.

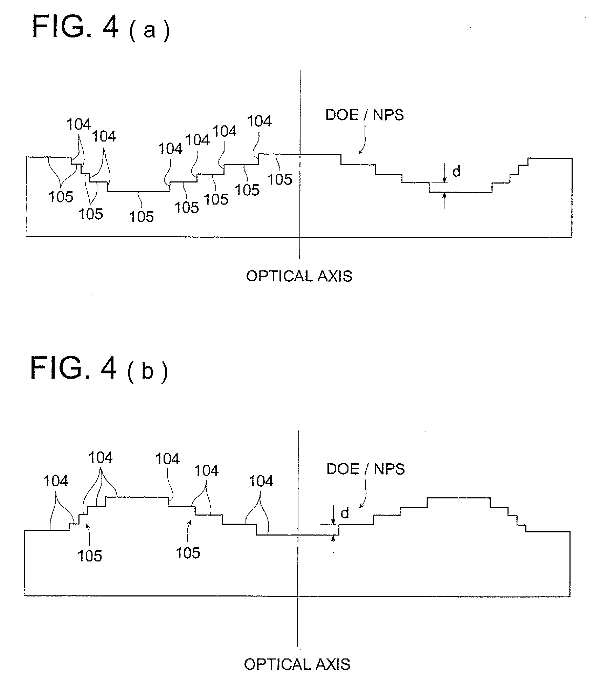

As schematically shown in Fig. 4(a) and Fig. 4(b), the "optical-path difference providing structure" (hereinafter, referred to as optical-path difference providing structure NPS), described in the present specification, is constituted by a plurality of ring-shaped zones 105 divided by the steps (depth d) in a direction of the optical axis as a pattern of concentric circles. It is applicable that the direction of step 104 is such a cross sectional form that alternates in a mid-course of the effective diameter. In optical-path difference providing structure NPS, depth d of the step is designed so as to generate a optical-path difference equivalent to an integer multiple of the wavelength of the incident laser beam between adjacent ring-shaped zones at a predetermined temperature and an established wavelength, and fulfills Equation 3 shown as follow.

$$d = 5k \times \lambda 1 / (N1 - 1) = 3k \times \lambda 2 / (N2 - 1) \qquad \text{(Eq. 3)}$$

where $\lambda 1$: wavelength in the wavelength region employed by high-density optical disk HD, $\lambda 2$: wavelength in the wavelength region employed by the DVD, N1: refractivity of the aberration correcting element for wavelength $\lambda 1$, N2: refractivity of the aberration correcting element for wavelength $\lambda 2$, and k: natural numeral.

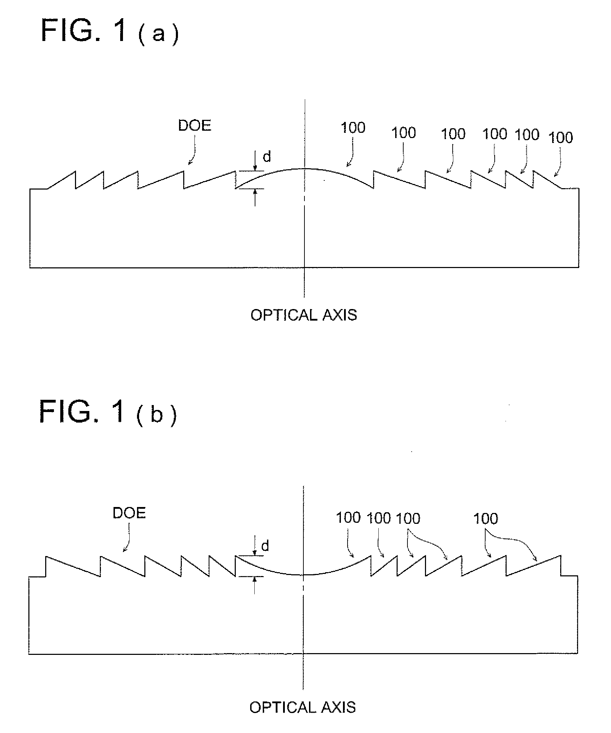

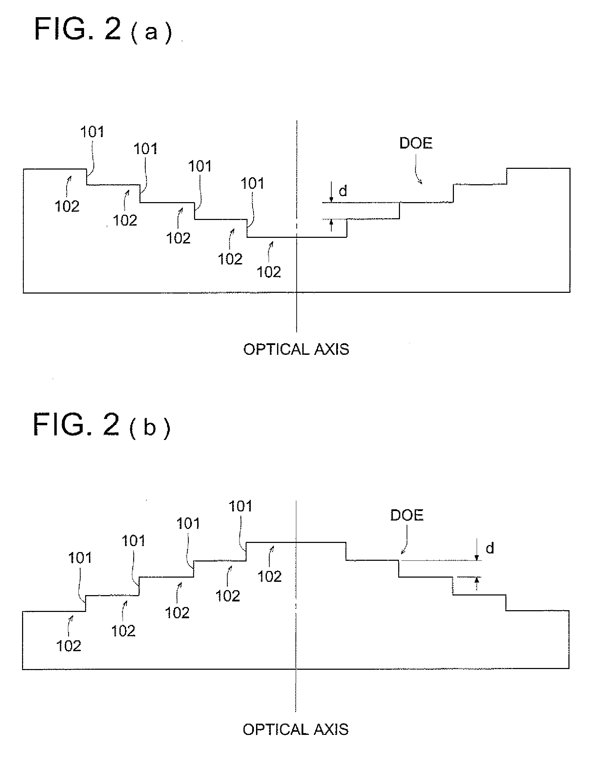

As schematically shown in Fig. 1(a) and Fig. 1(b), the "different-order diffractive structure" (hereinafter, referred to as different-order diffractive structure DOE), described in the present specification, is constituted by a plurality of ring-shaped zones 100 arranged in a pattern of concentric circles. Further, as schematically shown in Fig. 2(a) and Fig. 2(b), it is applicable that different-order diffractive structure DOE is constituted by a plurality of ring-shaped zones 102, in which the directions of steps 101 are the same within the effective diameter, and the cross sectional form including the optical axis is stepwise. Still further, as schematically shown in Fig. 4(a) and Fig. 4(b), it is also applicable that different-order diffractive structure DOE is constituted by a plurality of ring-shaped zones 105, in which the directions of steps 104 alternate in a mid-course of the effective diameter, and the cross sectional form including the optical axis is stepwise.

When the diffraction order of the diffracted light ray, having a maximum diffraction efficiency among diffracted light rays generated by the incoming first laser beam of wavelength $\lambda 1$, is defined as n1, while the diffraction order of the diffracted light ray, having a maximum diffraction efficiency among diffracted light rays generated by the incoming second laser beam of wavelength $\lambda 2$, is defined as n2, step depth d of the diffractive structure is established so as to fulfill the relationship of n1 > n2. It is preferable that the concrete combination of n1 and n2, namely, (n1, n2), is equal to any one of (2, 1), (3, 2), (5, 3), (8, 5) and (10, 6). By appropriately selecting any one of them, it becomes possible to maintain high diffraction efficiency at a wavelength for each of various kinds of optical discs.

Incidentally, although the phase structures formed on the flat surfaces are schematically indicated in Figs. 1 (a) through 4(b), it is applicable that such the phase structures are formed on either spherical surfaces or aspheric surfaces.

(5) The objective optical system used for the optical pick-up device, recited in item 4, characterized in that the aberration correcting element is a plastic lens while the light converging element is a grass lens, and the P1 and the P2 fulfill equation (3) shown as follow.

$$-0.05 \le P1 / P2 \le 0.05 \qquad \text{(3)}$$

(6) The objective optical system used for the optical pick-up device, recited in item 5, characterized in that the refractivity of the light converging element at wavelength $\lambda 1$ of the first laser beam is equal to or greater than 1.6.

(7) The objective optical system used for the optical pick-up device, recited in item 4, characterized in that both the aberration correcting element and the light converging element are plastic lens, and the P1 and the P2 fulfill equation (4) shown as follow.

$$0.03 \leq P1 / P2 \leq 0.30 \tag{4}$$

(8) The objective optical system used for the optical pick-up device, recited in item 7, characterized in that
the first phase structure is the different-order diffractive structure, while the second phase structure is the optical-path difference providing structure, and the P1 and the P2 fulfill equation (5) shown as follow.

$$0.08 \leq P1 / P2 \leq 0.10 \tag{5}$$

(9) The objective optical system used for the optical pick-up device, recited in item 7, characterized in that
the first phase structure is the different-order diffractive structure, while the second phase structure is the different-order diffractive structure, and the P1 and the P2 fulfill equation (6) shown as follow.

$$0.08 \leq P1 / P2 \leq 0.10 \tag{6}$$

(10) The objective optical system used for the optical pick-up device, recited in item 7, characterized in that
the first phase structure is the wavelength-selective diffractive structure HOE, while the second phase structure is the optical-path difference providing structure, and the P1 and the P2 fulfill equation (7) shown as follow.

$$0.07 \leq P1 / P2 \leq 0.10 \tag{7}$$

(11) The objective optical system used for the optical pick-up device, recited in item 7, characterized in that
the first phase structure is the wavelength-selective diffractive structure HOE, while the second phase structure is the different-order diffractive structure DOE, and the P1 and the P2 fulfill equation (8) shown as follow.

$$0.08 \leq P1 / P2 \leq 0.10 \tag{8}$$

(12) The objective optical system used for the optical pick-up device, recited in any one of items 1 - 11, characterized in that
the aberration correcting element and the light converging element are integrated with each other.
(13) An optical pick-up device, characterized in that
the optical pick-up device is equipped with the objective optical system recited in any one of items 1 - 12.
(14) An optical information recording/reproducing apparatus, characterized in that
the optical information recording/reproducing apparatus is equipped with the optical pick-up device recited in item 13.

According to the present invention, it becomes possible to provide an objective optical system to be employed for an optical pick-up device, an optical pick-up device and an optical information recording/reproducing apparatus, each of which makes it possible to record information onto various kinds of optical discs having different recording densities in a state of sufficiently correcting the spherical aberration, and further, which makes it possible to simplify the lens manufacturing process.
Referring to the drawings, the best mode of the present invention will be detailed in the following.

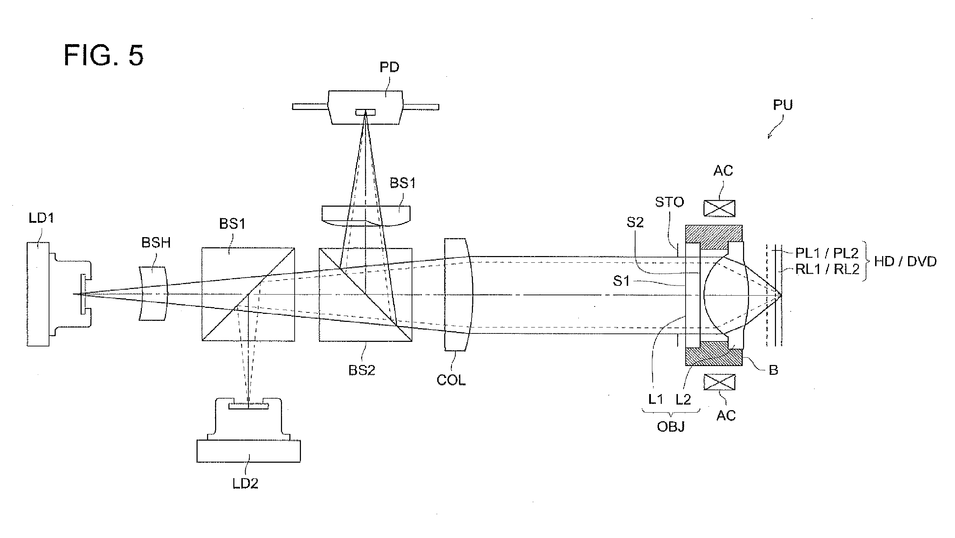

Fig. 5 shows a schematic diagram of the configuration of the optical pick-up device, which makes it possible to appropriately perform a recording/reproducing operation for high-density optical disk HD and the DVD.
The optical specifications of high-density optical disk HD includes: wavelength $\lambda 1$ = 407 nm; thickness t1 (of the protective layer PL1) = 0.1 mm; numerical aperture NA1 = 0.85, while the optical specifications of the DVD includes: wavelength $\lambda 2$ = 660 nm; thickness t2 (of the protective layer PL2) = 0.6 mm; numerical aperture NA2 = 0.65. However, the scope of the combination of the wavelength, the thickness of the protective layer and the numerical aperture is not limited to the above.
As shown in Fig. 5, optical pick-up device PU is constituted by: blue-violet semiconductor laser diode LD1 to emit a laser beam of wavelength $\lambda 1$ when conducting the information recording/reproducing operation for high-density optical disk HD; red semiconductor laser diode LD2 to emit a laser beam of wavelength $\lambda 2$ when conducting the infor-

mation recording/reproducing operation for the DVD; photo detector PD, serving as a common detector for high-density optical disk HD and the DVD, to detect a light beam reflected from information recording surface RL1 of high-density optical disk HD and to detect a light beam reflected from information recording surface RL2 of the DVD; beam shaping element BSH to shape a cross sectional form of the laser beam emitted from blue-violet semiconductor laser diode LD1 from an elliptical form to a circular form; first beam splitter BS1; second beam splitter BS2; objective optical system OBJ including aberration correcting element L1 and light converging element L2, both side surfaces of which are shaped in aspheric contours so as to give a function of converging the laser beam onto information recording surfaces RL1 and RL2; two-axis actuator AC; aperture STO that corresponds to numerical aperture NA1 of high-density optical disk HD; collimator lens COL; and sensor lens SEN. Incidentally, instead of blue-violet semiconductor laser diode LD1 mentioned in the above, the blue-violet SHG laser can be employed as the light source for high-density optical disk HD.

When the information recording/reproducing operation for high-density optical disk HD is performed in optical pick-up device PU, blue-violet semiconductor laser diode LD1 is activated to emit a laser beam, which travels along the optical path as shown by solid lines in Fig. 5. The cross sectional form of the diverging laser beam emitted from blue-violet semiconductor laser diode LD1 is shaped into a circular form from an elliptic form when passing through beam shaping element BSH. Then, the shaped laser beam passes through first beam splitter BS1 and second beam splitter BS2, and is changed to a substantially collimated beam by collimator lens COL. Successively, aperture STO regulates a diameter of the collimated beam, and objective optical system OBJ converges the regulated beam so as to form a spot onto information recording surface RL1 through protective layer PL1 of high-density optical disk HD. The two-axis actuator AC disposed around objective optical system OBJ performs focusing and tracking actions of objective optical system OBJ. The reflected beam modulated by the information pits residing on information recording surface RL1 again passes through objective optical system OBJ, aperture STO and collimator lens COL. Then, the returned beam is reflected by second beam splitter BS2 so as to converge onto photo detector PD through sensor lens SEN, which gives an astigmatism to the returned beam. Finally, the information recorded on high-density optical disk HD can be read by using the signals outputted by photo detector PD.

When the information recording/reproducing operation for the DVD is performed in optical pick-up device PU, red semiconductor laser diode LD2 is activated to emit a laser beam, which travels along the optical path as shown by broken lines in Fig. 5. The diverging laser beam emitted from red semiconductor laser diode LD2 passes through first beam splitter BS1 and second beam splitter BS2, and is changed to a substantially collimated beam by collimator lens COL. Successively, aperture STO regulates a diameter of the collimated beam, and objective optical system OBJ converges the regulated beam so as to form a spot onto information recording surface RL2 through protective layer PL2 of the DVD. The two-axis actuator AC disposed around objective optical system OBJ performs focusing and tracking actions of objective optical system OBJ. The reflected beam modulated by the information pits residing on information recording surface RL2 again passes through objective optical system OBJ, aperture STO and collimator lens COL. Then, the returned beam is reflected by second beam splitter BS2 so as to converge onto photo detector PD through sensor lens SEN, which gives an astigmatism to the returned beam. Finally, the information recorded on the DVD can be read by using the signals outputted by photo detector PD.

Next, the configuration of objective optical system OBJ will be detailed in the following.

As mentioned in the above, objective optical system OBJ is constituted by aberration correcting element L1 and light converging element L2, which has a first function for converging the first laser beam emitted from aberration correcting element L1 onto information recording surface RL1 of high-density optical disk HD and a second function for converging the second laser beam emitted from aberration correcting element L1 onto information recording surface RL2 of the DVD. The aberration correcting element L1 and light converging element L2 are integrated onto joining member B as a single part.

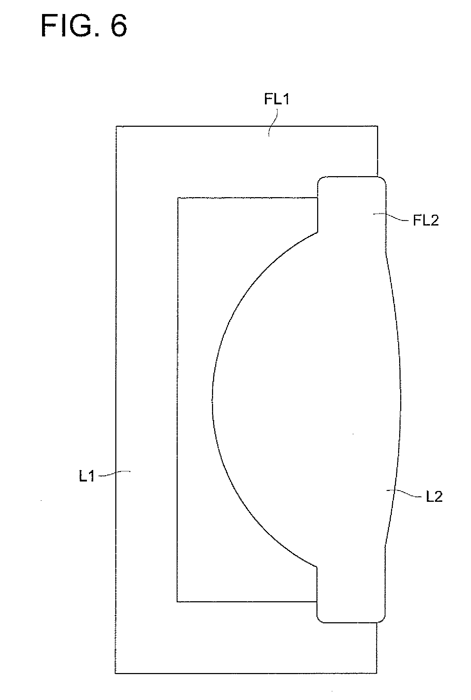

Incidentally, as shown in Fig. 6, it is also applicable that aberration correcting element L1 and light converging element L2 respectively have flange portion FL1 and flange portion FL2, each of which is located at a peripheral portion of its optically functional area (namely, the area through which the laser beam emitted from the blue-violet laser source passes), so as to integrate them by joining flange portion FL1 and flange portion FL2 with each other.

Further, the first phase structure is formed on optical surface S1 (incident surface) of aberration correcting element L1, directed to the semiconductor laser source side, while the second phase structure is formed on optical surface S2 (emitting surface) directed to the optical disc side.

Concretely speaking, as shown in Fig. 3(a) and Fig. 3(b), a plurality of ring-shaped zones are arranged as the first phase structure in a pattern of concentric circles, and wavelength-selective diffractive structure HOE is formed by dividing stepwise each of the plurality of ring-shaped zones into discontinuous steps in a direction of the optical axis.

In wavelength-selective diffractive structure HOE, depth d ($\mu$m) of the step structure formed on each of the plurality of ring-shaped zones is set at a value calculated by the equation shown as follow, and each of the plurality of ring-shaped zones is divided into five by four steps.

$$\text{Depth } d = 2 \times \lambda1 / (N1 - 1)$$

where $\lambda1$ represents the wavelength of the laser beam emitted from blue-violet semiconductor laser diode LD1 in a unit of micron (in this case, $\lambda1$ = 0.407 $\mu$m), while N1 represents the refractive index at wavelength $\lambda1$.

When the laser beam of wavelength $\lambda1$ is incoming into the step structure whose depth is set at the abovementioned value, the laser beam will penetrate through it without being diffracted, since an optical path difference of $2 \times \lambda1$ $\mu$m is generated between the adjacent step structures, and therefore, a phase difference is not substantially given to the laser beam of wavelength $\lambda1$.

When the laser beam of wavelength $\lambda2$ (in this case, $\lambda2$ = 0.660 $\mu$m) emitted from red semiconductor laser diode LD2 is incoming into the step structure whose depth is set at the abovementioned value, since optical path difference $\delta = 2 \times 0.407 \times (1.50635 - 1) / (1.52439 - 1) = 0.126$ $\mu$m is generated for every step, the optical path difference between the top step and the bottom step of each of the plurality of ring-shaped zones, each of which is divided into five steps, is calculated as 0.126 $\mu$m $\times$ 5 = 0.630 $\mu$m $\cong$ 1 $\times$ 660 nm, which is equivalent to one wavelength of wavelength $\lambda2$. Since wave fronts emitted from adjacent ring-shaped zones overlaps with each other in a state of one wavelength difference, the laser beam of wavelength $\lambda2$ is diffracted to the +1 order direction.

Incidentally, when aberration correcting element L1 and light converging element L2 is designed so as to make the wave front aberration minimum for a combination of the first laser beam of wavelength $\lambda1$ and thickness t1 of protective layer PL1 (t1 = 0.1 mm), the other wave front aberration of the second laser beam passed through objective optical system OBJ tends to be over-corrected due to the thickness difference between protective layer PL1 and protective layer PL2.

To avoid this drawback, the width of each ring-shaped zone of wavelength-selective diffractive structure HOE is established at such a value that a wave front aberration of an under-correcting tendency is added to the +1 order diffracted light ray by the diffracting action, when the second laser beam is incoming. This makes the wave front aberration of the over-correcting tendency, caused by an amount of the wave front aberration added by wavelength-selective diffractive structure HOE and the thickness difference between protective layer PL1 and protective layer PL2, and the wave front aberration of an under-correcting tendency cancel relative to each other so as to form a favorable beam spot on information recording surface RL2 from the second laser beam.

Further, as shown in Fig. 1(a) and Fig. 1(b), a plurality of ring-shaped zones are arranged as the second phase structure in a pattern of concentric circles, and different-order diffractive structure DOE is formed in such a manner that the cross sectional form including the optical axis is a sawtooth shape.

When the diffraction order of the diffracted light ray, having a maximum diffraction efficiency among diffracted light rays generated by the incoming first laser beam, is defined as n1, while the diffraction order of the diffracted light ray, having a maximum diffraction efficiency among diffracted light rays generated by the incoming second laser beam, is defined as n2, the step difference of the diffractive structure, which fulfills n1 > n2, is established in different-order diffractive structure DOE.

It is possible to attach a wavelength dependency of the spherical aberration to different-order diffractive structure DOE, so that, when the first laser beam enters into different-order diffractive structure DOE in a state that the wavelength is slightly longer, the spherical aberration is changed toward an under-correcting state, while, when the first laser beam enters into different-order diffractive structure DOE in a state that the wavelength is slightly shorter, the spherical aberration is changed toward an over-correcting state. Accordingly, it becomes possible to cancel the changes of the spherical aberration, occurring associated with the changes of the incident wavelength, relative to each other, so as to suppress the change of the light-condensing characteristic of objective optical system OBJ.

Incidentally, the function of suppressing the change of the light-condensing characteristic of objective optical system OBJ, caused by the refractivity change of each of the lenses constituting the objective optical system OBJ, occurring associated with the environmental temperature variation, can be given by using the wavelength dependency of the spherical aberration of different-order diffractive structure DOE.

Further, when the paraxial power of aberration correcting element L1 for the first laser beam, the paraxial power of light converging element L2 for the first laser beam, the magnification factor of objective optical system OBJ for recording and/or reproducing the information onto/from high-density optical disk HD, and the magnification factor of objective optical system OBJ for recording and/or reproducing the information onto/from the DVD are denoted as P1 (mm$^{-1}$), P2 (mm$^{-1}$), m1 and m2, respectively, aberration correcting element L1 and light converging element L2 are designed so as to fulfill the equations (1) and (2) shown as follow.

$$-0.05 \leq P1 / P2 \leq 0.30 \tag{1}$$

$$0 \leq |\,|m1| - |m2|\,| \leq 0.05 \tag{2}$$

As described in the above, by giving the refractive power for the incident laser beam exclusively to light converging element L2 disposed directly opposite to the optical disc, it becomes possible to maintain a sufficient working distance for the DVD, and a setting accuracy when combining the aberration correcting element L1 and the light converging element L2 can be reduced.

Further, since the curvatures of the incident surface and the emission surface of aberration correcting element L1 become small, and therefore, both the surfaces can be formed in substantially a flat shape, the stepwise portions of the first phase structure and the second phase structure, both of which are respectively formed on the incident surface and the emission surface, shut out the traveling path of the laser beam, and therefore, it is possible to minimize the ratio of a laser beam portion, which does not contribute for forming a converged light spot. Accordingly, it becomes possible to prevent objective optical system OBJ from deteriorating its transmittance, resulting in an easiness of the lens manufacturing process, compared to the case in which the phase structure is formed on the optical surface having a large curvature.

Still further, by reducing the difference between the magnification factor for high-density optical disk HD and that for the DVD, it becomes possible to simplify the configuration of the optical pick-up device and to make the tracking control easy. Still further, by setting the magnification factor for each disc at zero, it is possible to suppress the comatic aberration caused by the shifting of objective optical system OBJ, resulting in an realization of a desirable tracking characteristics.

Incidentally, although wavelength-selective diffractive structure HOE and different-order diffractive structure DOE are employed as the phase structure in the present embodiment, other than them, it is applicable that optical-path difference providing structure NPS and different-order diffractive structure DOE, each of which is structured by a plurality of ring-shaped zones arranged in a pattern of concentric circles and divided as steps in a direction of the optical path, are employed as the phase structure, as shown in Fig 4(a) and Fig 4(b). Further, the scope of the combination of the first phase structure and the second phase structure is not limited to that of indicated in the present embodiment. It is also applicable that a combination of any two of wavelength-selective diffractive structure HOE, different-order diffractive structure DOE and optical-path difference providing structure NPS is employed for this purpose, or any one of them is employed for both of the first phase structure and the second phase structure.

Further, when the interchangeability between high-density optical disk HD, having thickness t1 of protective layer PL1 (t1 = 0.6 mm), and the DVD is given to the optical pick-up device, since it is not necessary to compensate for the spherical aberration, caused by the thickness difference between protective layer PL1 and protective layer PL2, by using the first phase structure, the structure for compensating for the spherical aberration caused by the wavelength difference between the first laser beam and the second laser beam can be formed as the first phase structure.

Incidentally, when aberration correcting element L1 is a plastic lens and light converging element L2 is a grass lens, it is preferable that aberration correcting element L1 and light converging element L2 are designed, so that P1 and P2, mentioned in the above, fulfill equation (3) shown as follow.

$$-0.05 \leq P1 / P2 \leq 0.05 \tag{3}$$

Further, by equipping optical pick-up device PU, a rotational driving device for rotatably holding the optical disc and a controlling device for controlling the driving actions of various kinds of such devices into the optical information recording/reproducing apparatus, it becomes possible to provide the optical information recording/reproducing apparatus, which makes it possible to execute at least one of an operation for recording optical information onto the optical disc and an operation for reproducing optical information recorded on the optical disc, though the drawings for this configuration are omitted.

Next, the examples of objective optical system OBJ described in the forgoing will be detailed in the following.

Incidentally, among examples 1 - 9 of objective optical systems shown in the following, in each of examples 1 - 8, both aberration correcting element L1 and light converging element L2 are plastic lenses, while, in example 9, aberration correcting element L1 is a plastic lens and light converging element L2 is a grass lens.

[EXAMPLE 1]

Table 1 shows lens data of the objective optical system in example 1.

In Tables 1 - 9, numerical symbols are defined as follow.

NA1, NA2: Numerical Apertures

f1, f2: focal lengths (mm)

$\lambda$1, $\lambda$2: design wavelengths (nm)

m1, m2: magnification factors

t1, t2: thickness of protective layers

OBJ : an objective point (light-emitting point of semiconductor laser source)

SIO : an aperture

r : a radius of curvature (mm)

d1, d2: distance between surfaces (mm)

N$\lambda$1, N$\lambda$2: refractivities for design wavelength

$\nu$d : an Abbe number for d-line (587.6 nm)

n1, n2: diffraction order of recording/reproducing beam

$\lambda$B : a manufactured wavelength of diffractive structure (nm)

[Table 1 - 1]

[OPTICAL SPECIFICATIONS OF OBJECTIVE OPTICAL SYSTEM]
HD : NA1=0.85, f1=1.762mm, $\lambda$1=407nm, m1=0, t1=0.1mm
DVD : NA2=0.65, f2=1.839mm, $\lambda$2=660nm, m2=0, t2=0.6mm
[NEAR AXIS DATA]

| Surface number | r (mm) | d1 (mm) | d2 (mm) | N$\lambda$1 | N$\lambda$2 | vd | Remarks |
|---|---|---|---|---|---|---|---|
| OBJ | – | $\infty$ | $\infty$ | | | | Light source |
| STO | | 0.050 | 0.050 | | | | Aperture |
| 1 | *1 | 0.800 | 0.800 | 1.52439 | 1.50635 | 56.5 | Objective optical system |
| 2 | *1 | 0.050 | 0.050 | | | | |
| 3 | 1.158 | 1.940 | 1.940 | 1.55981 | 1.54055 | 56.3 | |
| 4 | -4.360 | 0.550 | 0.319 | | | | |
| 5 | $\infty$ | 0.100 | 0.600 | 1.62149 | 1.57962 | 30.0 | Protective layer |
| 6 | $\infty$ | | | | | | |

*1: (refer to the table shown below)

[RADIUS OF CURVATURE AT NEAR AXIS OF FIRST SURFACE AND SECOND SURFACE, COEFFICIENT OF ASPHERIC SURFACE, DIFFRACTION ORDER, DEFAULT WAVELENGTH, COEFFICIENT OF OPTICAL-PATH DIFFERENCE FUNCTION]

| | First surface | | Second surface |
|---|---|---|---|
| | AREA1 (0$\leq$h$\leq$1.190) | AREA2 (1.190$\leq$h) | |
| r | 0 | -266.70 | -30.079 |
| $\kappa$ | – | 0.0 | -135.00 |
| A4 | – | 4.1672E-3 | 3.1459E-3 |
| A6 | – | -3.2275E-3 | 1.7821E-3 |
| A8 | – | 9.6415E-4 | -4.7596E-4 |
| A10 | – | -7.1921E-5 | 3.5034E-4 |
| n1/n2 | 0/+1 | | +5/+3 |
| $\lambda$B | 660nm | | 407nm |
| C2 | 0.00607 | – | -0.0023 |
| C4 | -1.7226E-3 | – | -4.3408E-4 |
| C6 | -4.9632E-4 | – | -1.0693E-4 |
| C8 | 2.8654E-5 | – | -5.8847E-6 |
| C10 | -9.6694E-5 | – | -2.2751E-5 |

[Table 1 - 2]

| [COEFFICIENTS OF ASPHERIC SURFACES OF THIRD SURFACE AND FOURTH SURFACE] | | |
|---|---|---|
| | Third surface | Fourth surface |
| $\kappa$ | -0.66194 | -209.57 |
| A4 | 2.3605E-2 | 1.8576E-1 |

[Table 1 - 2]   (continued)

| [COEFFICIENTS OF ASPHERIC SURFACES OF THIRD SURFACE AND FOURTH SURFACE] | | |
| --- | --- | --- |
| | Third surface | Fourth surface |
| A6 | 7.3281E-3 | -3.1119E-1 |
| A8 | 1.1210E-3 | 4.5733E-1 |
| A10 | 2.0127E-3 | -4.9600E-1 |
| A12 | 6.6045E-4 | 3.0164E-1 |
| A14 | -8.1167E-4 | -7.4911E-2 |
| A16 | -2.3825E-5 | - |
| A18 | 3.8272E-4 | - |
| A20 | -1.0160E-4 | - |

Incidentally, in Table 1, a number to the tenth power (for instance, $4.1672 \times 10^{-3}$) is represented by employing "E" (for instance, 4.1672E-3).

The incident surface (the first surface) of the aberration correcting element is shaped in an aspheric surface, which is divided into first area AREA1 within a range of 0.00 mm $\leq$ h < 1.190 mm (h: height from the optical axis) and second area AREA2 within a range of 1.190 mm $\leq$ h, and the wavelength-selective diffractive structure, serving as the first phase structure, is formed in first area AREA1.

The emission surface (the second surface) of the aberration correcting element is also shaped in an aspheric surface, and the different-order diffractive structure, serving as the second phase structure, is formed in second area AREA2.

Further, both of the incident surface (the third surface) and the emission surface (the fourth surface) of the light converging element are shaped in aspheric surfaces without forming any phase structure on them.

Each of the aspheric surfaces, including the incident surface (the first surface) and the emission surface (the second surface) of the aberration correcting element and the incident surface (the third surface) and the emission surface (the fourth surface) of the light converging element, is defined by Equation 1 in which the corresponding coefficients indicated in Table 1 are substituted for the numerical symbols, and is axial symmetry with respect to the optical axis.

$$X(h) = \frac{(h^2/r)}{1+\sqrt{1-(1+\kappa)(h/r)^2}} + \sum_{i=0}^{9} A_{2i}h^{2i} \qquad \text{------------------(Eq. 1)}$$

where X(h): a variable quantity from a plan contacting the peak point of the surface (mm), h: a height from the optical axis in a direction perpendicular to the optical axis (mm), r: a radius of curvature (mm), $\kappa$: a cone coefficient and $A_{2i}$: an aspheric coefficient.

Further, the first phase structure and the second phase structure are represented by the optical path difference to be added to the transmission wave front by this structure. Such the optical path difference is represented by optical path difference function $\phi_b$ (mm) that is defined by Equation 2 in which the corresponding coefficients indicated in Table 1 are substituted for the numerical symbols, and which is shown as follow.

$$\Phi_b = n \times (\lambda/\lambda B) \times \sum_{j=0} C_{2j}h^{2j} \qquad \text{----------------------(Eq. 2)}$$

Where h: a height from the optical axis in a direction perpendicular to the optical axis (mm), $C_{2j}$: a coefficient of optical path difference function, n: a diffraction order of the diffracted light ray having a maximum diffraction efficiency among diffracted light rays of the incident laser beam, $\lambda$: a wavelength of the laser beam incident into the phase structure (nm) and $\lambda B$: a manufactured wavelength of the phase structure (nm).

Still further, the ratio P1/P2 between paraxial power P1 (mm$^{-1}$) of the aberration correcting element for the first laser beam and paraxial power P2 (mm$^{-1}$) of the light converging element for the first laser beam becomes 0.08.

Yet further, the depth of each step of the different-order diffractive structure is established at such a value that the diffraction efficiency of +5 order diffracted light ray becomes the maximum for wavelength $\lambda 1$, while the diffraction efficiency of +3 order diffracted light ray becomes the maximum for wavelength $\lambda 2$.

In the objective optical system embodied in the present invention, when an amount of the wavelength change of the blue-violet semiconductor laser beam, caused by the mode hopping, is 1 nm, a RMS value of wave front aberration becomes 0.036 $\lambda$RMS. This indicates that the change of the defocusing component, caused by the mode hopping, is desirably compensated for.

Further, when wavelength $\lambda 1$ of the first laser beam increases by 5 nm and wavelength $\lambda 2$ of the second laser beam increases by 20 nm, the RMS values of the wave front aberrations of them (namely, each being total sum of spherical-aberration components in a range being equal to and lower than the ninth order) become -0.027 $\lambda$RMS and -0.036 $\lambda$RMS, respectively. Still further, when the environmental temperature rises by 30 °C, the RMS values of the wave front aberrations of the first laser beam and the second laser beam (namely, each being total sum of spherical-aberration components in a range being equal to and lower than the ninth order) become 0.028 $\lambda$RMS and -0.025 $\lambda$RMS, respectively.

The abovementioned facts indicate that the objective optical system embodied in the present invention has a desirable performance for each of high-density optical disk HD and the DVD.

[EXAMPLE 2]

Table 2 shows lens data of the objective optical system in example 2.

[Table 2 - 1]

[OPTICAL SPECIFICATIONS OF OBJECTIVE OPTICAL SYSTEM]

HD : NA1=0.85, f1=1.765mm, λ1=405nm, m1=0, t1=0.1mm

DVD : NA2=0.65, f2=1.821mm, λ2=655nm, m2=0, t2=0.6mm

[NEAR AXIS DATA]

| Surface number | r (mm) | d1 (mm) | d2 (mm) | Nλ1 | Nλ2 | νd | Remarks |
|---|---|---|---|---|---|---|---|
| OBJ | – | ∞ | ∞ | | | | Light source |
| STO | | | | | | | Aperture |
| 1 | *1 | 1.300 | 1.300 | 1.52469 | 1.50651 | 56.5 | Objective optical system |
| 2 | 2.971 | 0.610 | 0.610 | | | | |
| 3 | 0.917 | 0.960 | 0.960 | 1.56013 | 1.54073 | 56.3 | |
| 4 | ∞ | 0.483 | 0.248 | | | | |
| 5 | ∞ | 0.100 | 0.600 | 1.62230 | 1.57995 | 30.0 | Protective layer |
| 6 | ∞ | | | | | | |

*1: (refer to the table shown below)

[RADIUS OF CURVATURE AT NEAR AXIS OF FIRST SURFACE AND SECOND SURFACE, COEFFICIENT OF ASPHERIC SURFACE, DIFFRACTION ORDER, DEFAULT WAVELENGTH, COEFFICIENT OF OPTICAL-PATH DIFFERENCE FUNCTION]

| | First surface | | Second surface |
|---|---|---|---|
| | AREA1 (0≤h≤1.200) | AREA2 (1.200≤h) | |
| r | 1.850 | 1.844 | 2.9710 |
| κ | -0.25769 | -0.39379 | 3.0132 |
| A4 | 5.2161E-3 | 6.5583E-3 | 1.5646E-2 |
| A6 | 2.2925E-3 | 2.9809E-3 | 1.3943E-2 |
| A8 | -3.8093E-4 | 1.6901E-4 | -9.6870E-3 |
| A10 | -1.4004E-3 | -1.5412E-3 | -9.2694E-3 |
| A12 | 7.0134E-4 | 6.5164E-4 | 2.3734E-3 |
| A14 | -2.2007E-4 | -1.9422E-4 | |
| n1/n2 | 0/+1 | | +5/+3 |
| λB | 660nm | | 407nm |
| C2 | 6.5378E-3 | – | -0.0020 |
| C4 | -1.6883E-3 | – | -2.6229E-4 |
| C6 | -5.7880E-4 | – | -2.9412E-4 |
| C8 | 1.0845E-4 | – | -7.0841E-6 |
| C10 | -1.0281E-4 | – | 8.8902E-6 |

[Table 2 - 2]

| [COEFFICIENTS OF ASPHERIC SURFACE OF THIRD SURFACE] | |
|---|---|
| | Third surface |
| κ | -0.56121 |

[Table 2 - 2]   (continued)

| [COEFFICIENTS OF ASPHERIC SURFACE OF THIRD SURFACE] | |
|---|---|
| | Third surface |
| A4 | 4.3908E-2 |
| A6 | 1.6250E-2 |
| A8 | 2.6818E-2 |
| A10 | -2.9872E-2 |

The incident surface (the first surface) of the aberration correcting element is shaped in an aspheric surface, which is divided into first area AREA1 within a range of 0.00 mm ≤ h < 1.20 mm (h: height from the optical axis) and second area AREA2 within a range of 1.20 mm ≤ h, and the wavelength-selective diffractive structure, serving as the first phase structure, is formed in first area AREA1.

The emission surface (the second surface) of the aberration correcting element is also shaped in an aspheric surface, and the different-order diffractive structure, serving as the second phase structure, is formed in second area AREA2.

Further, the incident surface (the third surface) of the light converging element is shaped in an aspheric surface without forming any phase structure on it, while the emission surface (the fourth surface) of the light converging element is shaped in a flat surface perpendicular to the optical axis without forming any phase structure on it.

Each of the aspheric surfaces, including the incident surface (the first surface) and the emission surface (the second surface) of the aberration correcting element and the incident surface (the third surface) of the light converging element, is defined by the aforementioned Equation 1 in which the corresponding coefficients indicated in Table 2 are substituted for the numerical symbols, and is axial symmetry with respect to the optical axis.

Further, the first phase structure and the second phase structure are represented by the optical path difference to be added to the transmission wave front by this structure. Such the optical path difference is represented by optical path difference function $\phi_b$ (mm) that is defined by the aforementioned Equation 2 in which the corresponding coefficients indicated in Table 2 are substituted for the numerical symbols.

Still further, the ratio P1/P2 between paraxial power P1 ($mm^{-1}$) of the aberration correcting element for the first laser beam and paraxial power P2 ($mm^{-1}$) of the light converging element for the first laser beam becomes 0.027.

Yet further, the depth of each step of the different-order diffractive structure is established at such a value that the diffraction efficiency of +5 order diffracted light ray becomes the maximum for wavelength $\lambda 1$, while the diffraction efficiency of +3 order diffracted light ray becomes the maximum for wavelength $\lambda 2$.

In the objective optical system embodied in the present invention, when an amount of the wavelength change of the blue-violet semiconductor laser beam, caused by the mode hopping, is 1 nm, a RMS value of wave front aberration becomes 0.065 $\lambda$RMS. This indicates that the change of the defocusing component, caused by the mode hopping, is desirably compensated for.

Further, when wavelength $\lambda 1$ of the first laser beam increases by 5 nm and wavelength $\lambda 2$ of the second laser beam increases by 20 nm, the RMS values of the wave front aberrations of them (namely, each being total sum of spherical-aberration components in a range being equal to and lower than the ninth order) become -0.011 $\lambda$RMS and -0.021 $\lambda$RMS, respectively. Still further, when the environmental temperature rises by 30 °C, the RMS values of the wave front aberrations of the first laser beam and the second laser beam (namely, each being total sum of spherical-aberration components in a range being equal to and lower than the ninth order) become 0.018 $\lambda$RMS and -0.020 $\lambda$RMS, respectively.

The abovementioned facts indicate that the objective optical system embodied in the present invention has a desirable performance for each of high-density optical disk HD and the DVD.

[EXAMPLE 3]

Table 3 shows lens data of the objective optical system in example 3.

[Table 3 − 1]

[OPTICAL SPECIFICATIONS OF OBJECTIVE OPTICAL SYSTEM]

HD   : NA1=0.85, f1=2.035mm, λ1=405nm, m1=0, t1=0.1mm

DVD  : NA2=0.63, f2=2.126mm, λ2=655nm, m2=0, t2=0.6mm

[NEAR AXIS DATA]

| Surface number | r (mm) | d1 (mm) | d2 (mm) | Nλ1 | Nλ2 | νd | Remarks |
|---|---|---|---|---|---|---|---|
| OBJ | − | ∞ | ∞ | | | | Light source |
| STO | | | | | | | Aperture |
| 1 | *1 | 0.950 | 0.950 | 1.52469 | 1.50651 | 56.5 | Objective optical system |
| 2 | 19.952 | 0.100 | 0.100 | | | | |
| 3 | 1.271 | 2.100 | 2.100 | 1.56013 | 1.54073 | 56.3 | |
| 4 | −7.121 | 0.595 | 0.372 | | | | |
| 5 | ∞ | 0.100 | 0.600 | 1.62230 | 1.57995 | 30.0 | Protective layer |
| 6 | ∞ | | | | | | |

*1: (refer to the table shown below)

[RADIUS OF CURVATURE AT NEAR AXIS OF FIRST SURFACE, COEFFICIENT OF ASPHERIC SURFACE, DIFFRACTION ORDER, DEFAULT WAVELENGTH, COEFFICIENT OF OPTICAL-PATH DIFFERENCE FUNCTION]

| | First surface | |
|---|---|---|
| | AREA1 (0≤h≤1.350) | AREA2 (1.350≤h) |
| r | 51.440 | 10.391 |
| κ | −5185.5 | −71.862 |
| A4 | 7.3667E-3 | 5.0525E-3 |
| A6 | 5.5122E-3 | −1.6272E-3 |
| A8 | 3.5503E-3 | 1.3859E-5 |
| A10 | −2.4365E-3 | −2.1067E-4 |
| A12 | 3.3926E-4 | 4.5104E-5 |
| A14 | 6.2092E-5 | 6.4390E-6 |
| A16 | − | 7.6265E-9 |
| n1/n2 | +2/+1 | +2 |
| λB | 390 | 405 |
| C2 | −1.5000E-2 | −3.8214E-3 |
| C4 | 2.8558E-3 | −1.4545E-3 |
| C6 | 6.7428E-4 | −1.4334E-4 |
| C8 | −2.6666E-4 | −4.9033E-5 |
| C10 | 6.7184E-4 | 3.5521E-6 |
| C12 | −4.1236E-4 | 6.1613E-7 |

[Table 3 - 2]

[COEFFICIENTS OF ASPHERIC SURFACES OF SECOND SURFACE, THIRD SURFACE AND FOURTH SURFACE]

|  | Second surface | Third surface | Fourth surface |
|---|---|---|---|
| κ | -165.33 | -0.57694 | -10.000 |
| A4 | -8.7813E-3 | 1.1813E-2 | 2.1527E-1 |
| A6 | 1.2094E-2 | 6.8554E-3 | -2.2296E-1 |
| A8 | -4.0294E-3 | -4.6651E-3 | 1.1431E-1 |
| A10 | 1.3061E-4 | 6.4180E-3 | -2.3611E-2 |
| A12 | 8.1046E-5 | -3.1562E-3 | -1.6946E-4 |
| A14 | 1.4682E-5 | 7.2862E-4 | -1.3001E-7 |
| A16 | -3.8204E-6 | 6.1408E-5 | -1.0851E-8 |
| A18 | - | -2.7743E-5 | - |
| A20 | - | -1.6502E-6 | - |

[SECOND SURFACE: OPTICAL-PATH DIFFERENCE PROVIDING STRUCTURE]

| i | HiS(mm) | HiL(mm) | Mild(mm) | ki1 | ki2 |
|---|---|---|---|---|---|
| 1 | 0 | 0.484 | 0 | 0 | 0 |
| 2 | 0.484 | 0.711 | -0.007719 | +10 | +6 |
| 3 | 0.711 | 0.977 | -0.015438 | +20 | +12 |
| 4 | 0.977 | 1.183 | -0.023157 | +30 | +18 |
| 5 | 1.183 | 1.330 | -0.015438 | +20 | +12 |
| 6 | 1.330 | 1.583 | -0.007719 | +10 | +6 |
| 7 | 1.583 | 1.73 | -0.015438 | +20 | +12 |

The incident surface (the first surface) of the aberration correcting element is shaped in an aspheric surface, which is divided into first area AREA1 within a range of 0.00 mm ≤ h < 1.35 mm (h: height from the optical axis) and second area AREA2 within a range of 1.35 mm ≤ h, and the wavelength-selective diffractive structure, serving as the first phase structure, is formed in both first area AREA1 and second area AREA2.

The emission surface (the second surface) of the aberration correcting element is also shaped in an aspheric surface, on which steps of an optical-path difference adding structure, serving as the second phase structure, are further formed.

Further, both of the incident surface (the third surface) and the emission surface (the fourth surface) of the light converging element are shaped in aspheric surfaces without forming any phase structure on them.

Each of the aspheric surfaces, including the incident surface (the first surface) and the emission surface (the second surface) of the aberration correcting element and the incident surface (the third surface) and the emission surface (the fourth surface) of the light converging element, is defined by the aforementioned Equation 1 in which the corresponding coefficients indicated in Table 3 are substituted for the numerical symbols, and is axial symmetry with respect to the optical axis.

Further, the first phase structure is represented by the optical path difference to be added to the transmission wave front by this structure. Such the optical path difference is represented by optical path difference function $\phi_b$ (mm) that is defined by the aforementioned Equation 2 in which the corresponding coefficients indicated in Table 3 are substituted for the numerical symbols.

Still further, the ratio P1/P2 between paraxial power P1 ($mm^{-1}$) of the aberration correcting element for the first laser beam and paraxial power P2 ($mm^{-1}$) of the light converging element for the first laser beam becomes 0.10.

Still further, the depth of each step of the different-order diffractive structure of first area AREA1 is established at such a value that the diffraction efficiency of +2 order diffracted light ray becomes the maximum for wavelength λ1 of the first laser beam, while the diffraction efficiency of +1 order diffracted light ray becomes the maximum for wavelength λ2 of the second laser beam. Yet further, the depth of each step of second area AREA2 is established at such a value that the diffraction efficiency of +2 order diffracted light ray becomes the maximum for wavelength λ1.

Still further, each step of the optical-path difference adding structure, serving as a second phase structure formed on the second surface, is established so as to fulfill the aforementioned Equation 3 for wavelength λ1 and wavelength λ2, and substantially, generates no phase difference. Character "i" indicated in the table denotes a number of an ring-shaped zone of the optical-path difference adding structure. The first ring-shaped zone circling the optical axis is denoted as i = 1, the next ring-shaped zone located outside of and adjacent to (in a direction being apart from the optical axis) the first ring-shaped zone of i = 1 is denoted as i = 2, and ring-shaped zones located at further outside of it are successively denoted as i = 3, -----. Concretely speaking, seven ring-shaped zones are formed in this example. Further, HiS and HiL denote a height of the top point and a height of the bottom point in each of the ring-shaped zones, respectively. Still further, Mild denotes a shift amount of each ring-shaped zone in a direction of the optical axis relative to the first ring-shaped zone (i = 1), and a sign "-" indicates a case that the concerned ring-shaped zone shifts toward the laser source side with respect to the first ring-shaped zone, while a sign "+" indicates a case that the concerned ring-shaped zone shifts toward the optical disc side with respect to the first ring-shaped zone. Still further, ki1 denotes a number of λs indicating how many λs of the phase of the wave front passed through the i-th ring-shaped zone is different compared to that passed through the first ring-shaped zone in the wavelength λ1 of the first laser beam, and ki2 denotes a number of λs indicating how many λs of the phase of the wave front passed through the i-th ring-shaped zone is different compared to that passed through the first ring-shaped zone in the wavelength λ2 of the second laser beam, and a sign "-" indicates a case that the phase of the i-th ring-shaped zone is delayed, compared to that passed through the first ring-shaped zone, while a sign "+" indicates a case that the phase of the i-th ring-shaped zone is progressed, compared to that passed through the first ring-shaped zone.

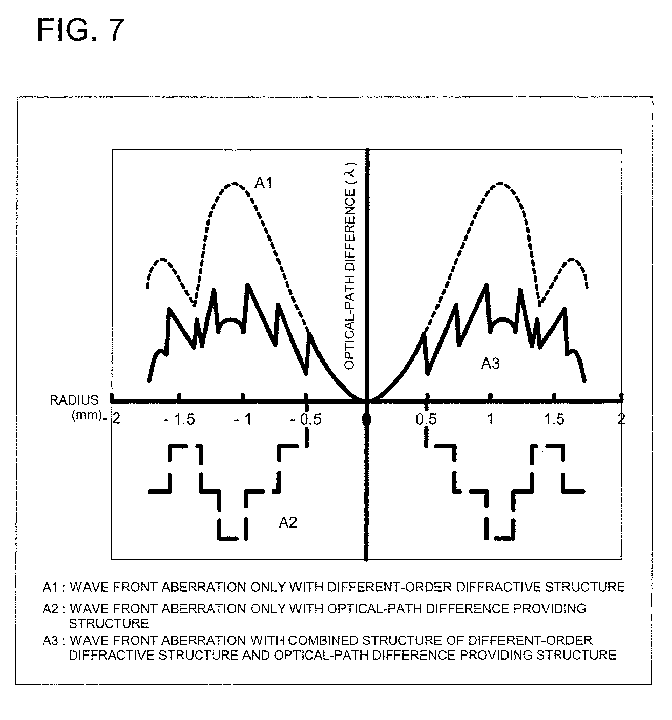

Fig. 7 shows a graph of the wave front aberration in this example, when the environment temperature rises by 30 °C. In Fig. 7, a wave front aberration when employing only the different-order diffractive structure, a wave front aberration when employing only the optical-path difference adding structure and a wave front aberration when employing both the different-order diffractive structure and the optical-path difference adding structure are indicated. It could be recognized from Fig. 7 that the spherical aberration characteristic of the different-order diffractive structure is favorably cancelled by introducing the optical-path difference adding structure.

In the objective optical system embodied in the present invention, when an amount of the wavelength change of the blue-violet semiconductor laser beam, caused by the mode hopping, is 1 nm, a RMS value of wave front aberration becomes 0.032 λRMS. This indicates that the change of the defocusing component, caused by the mode hopping, is desirably compensated for.

Further, when wavelength λ1 of the first laser beam increases by 5 nm and wavelength λ2 of the second laser beam increases by 20 nm, the RMS values of the wave front aberrations of them (namely, each being total sum of spherical-aberration components in a range being equal to and lower than the ninth order) become -0.031 λRMS and -0.068 λRMS, respectively. Still further, when the environmental temperature rises by 30 °C, the RMS values of the wave front aberrations of the first laser beam and the second laser beam (namely, each being total sum of spherical-aberration components in a range being equal to and lower than the ninth order) become 0.043 λRMS and -0.027 λRMS, respectively.

The abovementioned facts indicate that the objective optical system embodied in the present invention has a desirable performance for each of high-density optical disk HD and the DVD.

[EXAMPLE 4]

Table 4 shows lens data of the objective optical system in example 4.

[Table 4 - 1]

[OPTICAL SPECIFICATIONS OF OBJECTIVE OPTICAL SYSTEM]

HD : NA1=0.85, f1=1.762mm, λ1=407nm, m1=0, t1=0.1mm

DVD : NA2=0.65, f2=1.827mm, λ2=655nm, m2=0, t2=0.6mm

[NEAR AXIS DATA]

| Sur-face number | r (mm) | d1 (mm) | d2 (mm) | Nλ1 | Nλ2 | vd | Remarks |
|---|---|---|---|---|---|---|---|
| OBJ | − | ∞ | ∞ | | | | Light source |
| STO | | 0.200 | 0.200 | | | | Aperture |
| 1 | *1 | 0.870 | 0.870 | 1.52439 | 1.50651 | 56.5 | Objective optical system |
| 2 | *1 | 0.087 | 0.087 | | | | |
| 3 | 1.132 | 2.17 | 2.17 | 1.55981 | 1.54073 | 56.3 | |
| 4 | −2.194 | 0.480 | 0.256 | | | | |
| 5 | ∞ | 0.100 | 0.600 | 1.62149 | 1.57995 | 30.0 | Protective layer |
| 6 | ∞ | | | | | | |

*1: (refer to the table shown below)

[RADIUS OF CURVATURE AT NEAR AXIS OF FIRST SURFACE AND SECOND SURFACE, COEFFICIENT OF ASPHERIC SURFACE, DIFFRACTION ORDER, DEFAULT WAVELENGTH, COEFFICIENT OF OPTICAL-PATH DIFFERENCE FUNCTION]

| | First surface | | Second surface | |
|---|---|---|---|---|
| | AREA1 $(0 \leq h \leq 1.200)$ | AREA2 $(1.200 \leq h)$ | AREA3 $(0 \leq h \leq 1.200)$ | AREA4 $(1.200 \leq h)$ |
| r | −6.9820 | −10.051 | −23.029 | 19.8151 |
| κ | −8.3922E+1 | 6.7075E+0 | 1.0374E+2 | 1.5793E+2 |
| A4 | 3.7144E−3 | 1.6319E−2 | −6.4135E−3 | 1.9003E−2 |
| A6 | 1.0169E−2 | 1.1903E−2 | 1.2660E−2 | 5.6966E−3 |
| A8 | 3.6512E−3 | −2.6384E−3 | 9.2906E−3 | 1.4618E−3 |
| A10 | 1.5976E−3 | −8.2570E−5 | 3.4599E−3 | 1.6566E−4 |
| A12 | −1.11234E−3 | −1.9456E−4 | −1.5519E−3 | −3.2465E−4 |
| n1/n2/n3 | +2/+1 | +2 | +5/+3 | +5 |
| λB | 390nm | 407nm | 390nm | 407nm |
| C2 | −2.3000E−2 | −1.7675E−2 | −2.0000E−4 | −1.2004E−3 |
| C4 | 6.3234E−3 | 3.2924E−3 | 1.0592E−3 | −1.0262E−3 |
| C6 | −1.1960E−3 | 7.7963E−5 | −1.2477E−3 | −4.6272E−4 |
| C8 | 2.1013E−3 | 6.9463E−4 | −8.5074E−4 | −1.2041E−4 |
| C10 | −3.8443E−4 | −3.42901E−4 | −6.2336E−5 | −1.3526E−6 |

[Table 4 - 2]

| [COEFFICIENTS OF ASPHERIC SURFACES OF THIRD SURFACE AND FOURTH SURFACE] | | |
|---|---|---|
| | Third surface | Fourth surface |
| κ | -0.64557 | -64.986 |

[Table 4 - 2]   (continued)

| [COEFFICIENTS OF ASPHERIC SURFACES OF THIRD SURFACE AND FOURTH SURFACE] | | |
|---|---|---|
| | Third surface | Fourth surface |
| A4 | 1.5157E-2 | 1.6534E-1 |
| A6 | 2.7377E-3 | -3.6798E-1 |
| A8 | 9.4001E-3 | 4.5121E-1 |
| A10 | -9.6491E-3 | -3.5231E-1 |
| A12 | 2.8616E-3 | 1.5309E-1 |
| A14 | 4.0014E-3 | -2.7710E-2 |
| A16 | -4.3690E-3 | - |
| A18 | 1.7720E-3 | - |
| A20 | -2.9323E-4 | - |

The incident surface (the first surface) of the aberration correcting element is shaped in an aspheric surface, which is divided into first area AREA1 within a range of 0.00 mm $\leq$ h < 1.20 mm (h: height from the optical axis) and second area AREA2 within a range of 1.20 mm $\leq$ h, and a different-order diffractive structure, serving as the first phase structure, is formed in both first area AREA1 and second area AREA2.

The emission surface (the second surface) of the aberration correcting element is shaped in an aspheric surface, which is divided into third area AREA3 within a range of 0.00 mm $\leq$ h < 1.20 mm (h: height from the optical axis) and fourth area AREA4 within a range of 1.20 mm $\leq$ h, and a different-order diffractive structure, serving as the second phase structure, is formed in both third area AREA3 and fourth area AREA4.

Further, both of the incident surface (the third surface) and the emission surface (the fourth surface) of the light converging element are shaped in aspheric surfaces without forming any phase structure on them.

Each of the aspheric surfaces, including the incident surface (the first surface) and the emission surface (the second surface) of the aberration correcting element and the incident surface (the third surface) and the emission surface (the fourth surface) of the light converging element, is defined by the aforementioned Equation 1 in which the corresponding coefficients indicated in Table 4 are substituted for the numerical symbols, and is axial symmetry with respect to the optical axis.

Further, the first phase structure and the second phase structure are represented by the optical path difference to be added to the transmission wave front by this structure. Such the optical path difference is represented by optical path difference function $\phi_b$ (mm) that is defined by the aforementioned Equation 2 in which the corresponding coefficients indicated in Table 4 are substituted for the numerical symbols.

Still further, the ratio P1/P2 between paraxial power P1 (mm$^{-1}$) of the aberration correcting element for the first laser beam and paraxial power P2 (mm$^{-1}$) of the light converging element for the first laser beam becomes 0.00.

Still further, the depth of each step of the different-order diffractive structure formed in first area AREA1 is established at such a value that the diffraction efficiency of +2 order diffracted light ray becomes the maximum for wavelength $\lambda$1, while the diffraction efficiency of +1 order diffracted light ray becomes the maximum for wavelength $\lambda$2. Still further, the depth of each step of the different-order diffractive structure formed in third area AREA3 is established at such a value that the diffraction efficiency of +5 order diffracted light ray becomes the maximum for wavelength $\lambda$1, while the diffraction efficiency of +3 order diffracted light ray becomes the maximum for wavelength $\lambda$2. Yet further, the depth of each step of the different-order diffractive structure formed in third area AREA3 is established at such a value that the diffraction efficiency of +2 order diffracted light ray becomes the maximum for wavelength $\lambda$1, and the depth of each step of the different-order diffractive structure formed in fourth area AREA4 is established at such a value that the diffraction efficiency of +5 order diffracted light ray becomes the maximum for wavelength $\lambda$1.

In the objective optical system embodied in the present invention, when an amount of the wavelength change of the blue-violet semiconductor laser beam, caused by the mode hopping, is 1 nm, a RMS value of wave front aberration becomes 0.084 $\lambda$RMS. This indicates that the change of the defocusing component, caused by the mode hopping, is desirably compensated for.

Further, when wavelength $\lambda$1 of the first laser beam increases by 5 nm and wavelength $\lambda$2 of the second laser beam increases by 20 nm, the RMS values of the wave front aberrations of them (namely, each being total sum of spherical-aberration components in a range being equal to and lower than the ninth order) become -0.046 $\lambda$RMS and 0.021 $\lambda$RMS, respectively. Still further, when the environmental temperature rises by 30 °C, the RMS values of the wave front aberrations of the first laser beam and the second laser beam (namely, each being total sum of spherical-aberration components in a range being equal to and lower than the ninth order) become 0.049 $\lambda$RMS and 0.010 $\lambda$RMS, respectively.

The abovementioned facts indicate that the objective optical system embodied in the present invention has a desirable performance for each of high-density optical disk HD and the DVD.

[EXAMPLE 5]

Table 5 shows lens data of the objective optical system in example 5.

[Table 5 - 1]

[OPTICAL SPECIFICATIONS OF OBJECTIVE OPTICAL SYSTEM]

HD : NA1=0.85, f1=1.765mm, $\lambda$1=407nm, m1=0, t1=0.1mm

DVD : NA2=0.65, f2=1.842mm, $\lambda$2=660nm, m2=0, t2=0.6mm

[NEAR AXIS DATA]

| Surface number | r (mm) | d1 (mm) | d2 (mm) | N$\lambda$1 | N$\lambda$2 | vd | Remarks |
|---|---|---|---|---|---|---|---|
| OBJ | − | ∞ | ∞ | | | | Light source |
| STO | | 0.150 | 0.150 | | | | Aperture |
| 1 | *1 | 0.800 | 0.800 | 1.52439 | 1.50635 | 56.5 | Objective optical system |
| 2 | *1 | 0.850 | 0.850 | | | | |
| 3 | 1.158 | 1.940 | 1.940 | 1.55981 | 1.54055 | 56.3 | |
| 4 | −4.361 | 0.552 | 0.319 | | | | |
| 5 | ∞ | 0.100 | 0.600 | 1.62149 | 1.57962 | 30.0 | Protective layer |
| 6 | ∞ | | | | | | |

*1: (refer to the table shown below)

[RADIUS OF CURVATURE AT NEAR AXIS OF FIRST SURFACE AND SECOND SURFACE, COEFFICIENT OF ASPHERIC SURFACE, DIFFRACTION ORDER, DEFAULT WAVELENGTH, COEFFICIENT OF OPTICAL-PATH DIFFERENCE FUNCTION]

| | First surface | | Second surface | |
|---|---|---|---|---|
| | AREA1 (0≤h≤1.192) | AREA2 (1.192≤h) | AREA3 (0≤h≤1.192) | AREA4 (1.192≤h) |
| r | −7.4502 | −17.465 | −6.0670 | −10.311 |
| κ | −10.601 | 101.09 | −28.359 | −111.59 |
| A4 | 19011E−2 | 8.8320E−3 | 7.6638E−3 | 4.1142E−3 |
| A6 | −38039E−3 | −4.1128E−3 | 7.2058E−3 | 3.5916E−4 |
| A8 | 9.1327E−3 | 2.9347E−3 | 3.3761E−3 | −4.6926E−4 |
| A10 | −1.7418E−3 | −6.2775E−4 | 4.6398E−4 | 8.0761E−4 |
| A12 | 2.6093E−4 | 1.8314E−5 | −2.023E−4 | −2.0118E−4 |
| A14 | −1.1096E−4 | −2.6732E−5 | − | − |
| n1/n2 | +2/+1 | +2 | +5/+3 | +2 |
| $\lambda$B | 390 | 407 | 407 | 407 |
| C2 | −1.7353E−2 | −6.5000E−3 | 4.8437E−3 | 2.3000E−3 |
| C4 | 6.0833E−3 | −7.0703E−4 | −2.5949E−3 | −2.9024E−3 |
| C6 | −1.8002E−4 | 9.8549E−4 | −6.0277E−4 | −3.3548E−4 |
| C8 | 1.1678E−3 | 1.0877E−4 | −5.9249E−5 | 1.3376E−4 |
| C10 | −6.1069E−5 | −1.7739E−4 | −1.1655E−4 | −1.5360E−5 |

[Table 5 - 2]

| [COEFFICIENTS OF ASPHERIC SURFACES OF THIRD SURFACE AND FOURTH SURFACE] | | |
| --- | --- | --- |
| | Third surface | Fourth surface |
| $\kappa$ | -0.66194 | -209.57 |
| A4 | 2.3605E-2 | 1.8576E-1 |
| A6 | 7.3281E-3 | -3.1119E-1 |
| A8 | 1.1210E-3 | 4.5733E-1 |
| A10 | 2.0127E-3 | -4.9600E-1 |
| A12 | 6.6045E-4 | 3.0164E-1 |
| A14 | -8.1167E-4 | -7.4911.E-2 |
| A16 | -2.3824E-5 | - |
| A18 | 3.8272E-4 | - |
| A20 | -1.0160E-4 | - |

The incident surface (the first surface) of the aberration correcting element is shaped in an aspheric surface, which is divided into first area AREA1 within a range of 0.00 mm $\leq$ h < 1.192 mm (h: height from the optical axis) and second area AREA2 within a range of 1.192 mm $\leq$ h, and a different-order diffractive structure, serving as the first phase structure, is formed in both first area AREA1 and second area AREA2.

The emission surface (the second surface) of the aberration correcting element is shaped in an aspheric surface, which is divided into third area AREA3 within a range of 0.00 mm $\leq$ h < 1.192 mm (h: height from the optical axis) and fourth area AREA4 within a range of 1.192 mm $\leq$ h, and a different-order diffractive structure, serving as the second phase structure, is formed in both third area AREA3 and fourth area AREA4.

Further, both of the incident surface (the third surface) and the emission surface (the fourth surface) of the light converging element are shaped in aspheric surfaces without forming any phase structure on them.

Each of the aspheric surfaces, including the incident surface (the first surface) and the emission surface (the second surface) of the aberration correcting element and the incident surface (the third surface) and the emission surface (the fourth surface) of the light converging element, is defined by the aforementioned Equation 1 in which the corresponding coefficients indicated in Table 5 are substituted for the numerical symbols, and is axial symmetry with respect to the optical axis.

Further, the first phase structure and the second phase structure are represented by the optical path difference to be added to the transmission wave front by this structure. Such the optical path difference is represented by optical path difference function $\phi_b$ (mm) that is defined by the aforementioned Equation 2 in which the corresponding coefficients indicated in Table 5 are substituted for the numerical symbols.

Still further, the ratio P1/P2 between paraxial power P1 (mm$^{-1}$) of the aberration correcting element for the first laser beam and paraxial power P2 (mm$^{-1}$) of the light converging element for the first laser beam becomes 0.07.

Still further, the depth of each step of the different-order diffractive structure formed in first area AREA1 is established at such a value that the diffraction efficiency of +2 order diffracted light ray becomes the maximum for wavelength $\lambda$1, while the diffraction efficiency of +1 order diffracted light ray becomes the maximum for wavelength $\lambda$2. Still further, the depth of each step of the different-order diffractive structure formed in third area AREA3 is established at such a value that the diffraction efficiency of +5 order diffracted light ray becomes the maximum for wavelength $\lambda$1, while the diffraction efficiency of +3 order diffracted light ray becomes the maximum for wavelength $\lambda$2. Yet further, the depth of each step of the different-order diffractive structure formed in third area AREA3 is established at such a value that the diffraction efficiency of +2 order diffracted light ray becomes the maximum for wavelength $\lambda$1, and the depth of each step of the different-order diffractive structure formed in fourth area AREA4 is established at such a value that the diffraction efficiency of +2 order diffracted light ray becomes the maximum for wavelength $\lambda$1.

In the objective optical system embodied in the present invention, when an amount of the wavelength change of the blue-violet semiconductor laser beam, caused by the mode hopping, is 1 nm, a RMS value of wave front aberration becomes 0.035 $\lambda$RMS. This indicates that the change of the defocusing component, caused by the mode hopping, is desirably compensated for.

Further, when wavelength $\lambda$1 of the first laser beam increases by 5 nm and wavelength $\lambda$2 of the second laser beam increases by 20 nm, the RMS values of the wave front aberrations of them (namely, each being total sum of spherical-aberration components in a range being equal to and lower than the ninth order) become -0.028 $\lambda$RMS and -0.036 $\lambda$RMS, respectively. Still further, when the environmental temperature rises by 30 °C, the RMS values of the wave front aberrations of the first laser beam and the second laser beam (namely, each being total sum of spherical-aberration components in a range being equal to and lower than the ninth order) become 0.029 λRMS and -0.023 λRMS, respectively.

The abovementioned facts indicate that the objective optical system embodied in the present invention has a desirable performance for each of high-density optical disk HD and the DVD.

[EXAMPLE 6]

Table 6 shows lens data of the objective optical system in example 6.

[Table 6 - 1]

[OPTICAL SPECIFICATIONS OF OBJECTIVE OPTICAL SYSTEM]

HD : NA1=0.85, f1=1.768mm, λ1=405nm, m1=0, t1=0.1mm

DVD : NA2=0.65, f2=1.821mm, λ2=655nm, m2=0, t2=0.6mm

[NEAR AXIS DATA]

| Surface number | r (mm) | d1 (mm) | d2 (mm) | Nλ1 | Nλ2 | νd | Remarks |
|---|---|---|---|---|---|---|---|
| OBJ | − | ∞ | ∞ | | | | Light source |
| STO | | 0.100 | 0.100 | | | | Aperture |
| 1 | *1 | 1.300 | 1.300 | 1.52469 | 1.50651 | 56.5 | Objective optical system |
| 2 | *1 | 0.610 | 0.610 | | | | |
| 3 | 0.898 | 0.950 | 0.950 | 1.56013 | 1.54073 | 56.3 | |
| 4 | ∞ | 0.456 | 0.212 | | | | |
| 5 | ∞ | 0.100 | 0.600 | 1.62230 | 1.57995 | 30.0 | Protective layer |
| 6 | ∞ | | | | | | |

*1: (refer to the table shown below)

[RADIUS OF CURVATURE AT NEAR AXIS OF FIRST SURFACE AND SECOND SURFACE, COEFFICIENT OF ASPHERIC SURFACE, DIFFRACTION ORDER, DEFAULT WAVELENGTH, COEFFICIENT OF OPTICAL-PATH DIFFERENCE FUNCTION]

| | First surface | | Second surface | |
|---|---|---|---|---|
| | AREA1 (0≤h≤1.200) | AREA2 (1.200≤h) | AREA3 (0≤h≤0.93) | AREA4 (0.93≤h) |
| r | 2.1610 | 1.8308 | 3.0882 | 2.7212 |
| κ | 4.9679E-2 | -4.6408E-1 | 4.8456 | 2.4989 |
| A4 | 1.5123E-2 | 5.0166E-3 | -3.6991E-2 | 4.1617E-3 |
| A6 | 1.5906E-2 | 1.1201E-4 | 7.7142E-2 | 5.5365E-3 |
| A8 | -1.2219E-2 | -3.5772E-4 | -2.6475E-2 | 1.0922E-3 |
| A10 | 7.8678E-3 | -2.1886E-4 | 1.6997E-2 | -9.3729E-3 |
| A12 | -2.6157E-3 | 2.7957E-4 | 2.8063E-3 | 4.5169E-4 |
| A14 | 7.8272E-4 | -1.3102E-4 | | |
| n1/n2 | +2/+1 | +2 | +5/+3 | +5 |
| λB | 390 | 405 | 405 | 405 |
| C2 | -1.500E-2 | -2.4591E-3 | 1.5103E-3 | -2.3206E-3 |
| C4 | 4.4637E-3 | -6.6816E-5 | 7.7110E-4 | -2.0995E-3 |
| C6 | 2.5086E-3 | -2.1480E-4 | -7.0375E-3 | -8.4902E-4 |
| C8 | -6.9638E-4 | 9.9905E-5 | -2.1439E-3 | 6.4569E-5 |
| C10 | 4.2723E-4 | 1.8107E-5 | 1.0748E-3 | 2.9934E-4 |

[Table 6 - 2]

| [COEFFICIENTS OF ASPHERIC SURFACE OF THIRD SURFACE] | |
|---|---|
| | Third surface |
| κ | -0.65250 |
| A4 | 3.6934E-2 |
| A6 | 2.6545E-2 |
| A8 | -1.4254E-2 |
| A10 | 1.4029E-2 |

The incident surface (the first surface) of the aberration correcting element is shaped in an aspheric surface, which is divided into first area AREA1 within a range of 0.00 mm ≤ h < 1.20 mm (h: height from the optical axis) and second area AREA2 within a range of 1.20 mm ≤ h, and a different-order diffractive structure, serving as the first phase structure, is formed in both first area AREA1 and second area AREA2.

The emission surface (the second surface) of the aberration correcting element is shaped in an aspheric surface, which is divided into third area AREA3 within a range of 0.00 mm ≤ h < 0.93 mm (h: height from the optical axis) and fourth area AREA4 within a range of 0.93 mm ≤ h, and a different-order diffractive structure, serving as the second phase structure, is formed in both third area AREA3 and fourth area AREA4.

Further, the incident surface (the third surface) of the light converging element is shaped in an aspheric surface without forming any phase structure on it, while the emission surface (the fourth surface) of the light converging element is shaped in a flat surface perpendicular to the optical axis without forming any phase structure on it.

Each of the aspheric surfaces, including the incident surface (the first surface) and the emission surface (the second surface) of the aberration correcting element and the incident surface (the third surface) of the light converging element, is defined by the aforementioned Equation 1 in which the corresponding coefficients indicated in Table 6 are substituted for the numerical symbols, and is axial symmetry with respect to the optical axis.

Further, the first phase structure and the second phase structure are represented by the optical path difference to be added to the transmission wave front by this structure. Such the optical path difference is represented by optical path difference function $\phi_b$ (mm) that is defined by the aforementioned Equation 2 in which the corresponding coefficients indicated in Table 6 are substituted for the numerical symbols.

Still further, the ratio P1/P2 between paraxial power P1 (mm$^{-1}$) of the aberration correcting element for the first laser beam and paraxial power P2 (mm$^{-1}$) of the light converging element for the first laser beam becomes 0.27.

Still further, the depth of each step of the different-order diffractive structure formed in first area AREA1 is established at such a value that the diffraction efficiency of +2 order diffracted light ray becomes the maximum for wavelength λ1, while the diffraction efficiency of +1 order diffracted light ray becomes the maximum for wavelength λ2. Still further, the depth of each step of the different-order diffractive structure formed in third area AREA3 is established at such a value that the diffraction efficiency of +5 order diffracted light ray becomes the maximum for wavelength λ1, while the diffraction efficiency of +3 order diffracted light ray becomes the maximum for wavelength λ2. Yet further, the depth of each step of the different-order diffractive structure formed in third area AREA3 is established at such a value that the diffraction efficiency of +2 order diffracted light ray becomes the maximum for wavelength λ1, and the depth of each step of the different-order diffractive structure formed in fourth area AREA4 is established at such a value that the diffraction efficiency of +2 order diffracted light ray becomes the maximum for wavelength λ1.

In the objective optical system embodied in the present invention, when an amount of the wavelength change of the blue-violet semiconductor laser beam, caused by the mode hopping, is 1 nm, a RMS value of wave front aberration becomes 0.011 λRMS. This indicates that the change of the defocusing component, caused by the mode hopping, is desirably compensated for.

Further, when wavelength λ1 of the first laser beam increases by 5 nm and wavelength λ2 of the second laser beam increases by 20 nm, the RMS values of the wave front aberrations of them (namely, each being total sum of spherical-aberration components in a range being equal to and lower than the ninth order) become -0.025 λRMS and 0.014 λRMS, respectively. Still further, when the environmental temperature rises by 30 °C, the RMS values of the wave front aberrations of the first laser beam and the second laser beam (namely, each being total sum of spherical-aberration components in a range being equal to and lower than the ninth order) become -0.026 λRMS and -0.007 λRMS, respectively.

The abovementioned facts indicate that the objective optical system embodied in the present invention has a desirable performance for each of high-density optical disk HD and the DVD.

[EXAMPLE 7]

Table 7 shows lens data of the objective optical system in example 7.

[Table 7 - 1]

[OPTICAL SPECIFICATIONS OF OBJECTIVE OPTICAL SYSTEM]
HD     : NA1=0.85,  f1=2.024mm,  $\lambda$1=407nm,  m1=0,  t1=0.1mm
DVD    : NA2=0.64,  f2=2.093mm,  $\lambda$2=655nm,  m2=0,  t2=0.6mm
[NEAR AXIS DATA]

| Surface number | r (mm) | d1 (mm) | d2 (mm) | N$\lambda$1 | N$\lambda$2 | $\nu$d | Remarks |
|---|---|---|---|---|---|---|---|
| OBJ | – | $\infty$ | $\infty$ | | | | Light source |
| STO | | 0.050 | 0.050 | | | | Aperture |
| 1 | *1 | 1.000 | 1.000 | 1.52439 | 1.50651 | 56.5 | Objective optical system |
| 2 | -67.170 | 0.100 | 0.100 | | | | |
| 3 | 1.351 | 2.500 | 2.500 | 1.55981 | 1.54073 | 56.3 | |
| 4 | -2.436 | 0.619 | 0.394 | | | | |
| 5 | $\infty$ | 0.100 | 0.600 | 1.62149 | 1.57995 | 30.0 | Protective layer |
| 6 | $\infty$ | | | | | | |

*1: (refer to the table shown below)

[RADIUS OF CURVATURE AT NEAR AXIS OF FIRST SURFACE,
COEFFICIENT OF ASPHERIC SURFACE, DIFFRACTION ORDER, DEFAULT
WAVELENGTH, COEFFICIENT OF OPTICAL-PATH DIFFERENCE FUNCTION]

| | First surface | |
|---|---|---|
| | AREA1 (0$\leq$h$\leq$1.33) | AREA2 (1.33$\leq$h) |
| r | -7.4882 | -12.003 |
| $\kappa$ | -63.793 | 24.665 |
| A4 | -3.4664E-3 | 6.8687E-3 |
| A6 | 5.9416E-3 | 4.0650E-3 |
| A8 | -1.0435E-3 | -1.6996E-3 |
| A10 | 6.6877E-4 | -4.6847E-4 |
| A12 | -2.8387E-5 | -8.7447E-005 |
| n1/n2 | +2/+1 | +2 |
| $\lambda$B | 390 | 407 |
| C2 | -0.015 | -9.1346E-3 |
| C4 | 4.0686E-3 | 2.2673E-3 |
| C6 | -3.0329E-5 | 5.8214E-4 |
| C8 | 3.5840E-4 | 1.4070E-4 |
| C10 | 2.0314E-5 | -3.5107E-4 |

[Table 7 - 2]

[COEFFICIENTS OF ASPHERIC SURFACES OF SECOND SURFACE, THIRD SURFACE AND FOURTH SURFACE]

|  | Second surface | Third surface | Fourth surface |
|---|---|---|---|
| κ | 1178.2 | −0.65229 | −37.389 |
| A4 | −1.7998E−3 | 9.6424E−3 | 1.3816E−1 |
| A6 | −9.2987E−4 | −1.2627E−4 | −1.8246E−1 |
| A8 | −1.0491E−4 | 3.7252E−3 | 1.5797E−1 |
| A10 | 1.3296E−4 | −2.5746E−3 | −9.1511E−2 |
| A12 | 2.6808E−6 | 6.0934E−4 | 3.0395E−2 |
| A14 | − | 6.1257E−4 | −4.3374E−3 |
| A16 | − | −5.1887E−4 | − |
| A18 | − | 1.5660E−4 | − |
| A20 | − | −1.7638E−005 | − |

[SECOND SURFACE: OPTICAL-PATH DIFFERENCE PROVIDING STRUCTURE]

| i | HiS (mm) | HiL (mm) | Mild (mm) | ki1 | ki2 |
|---|---|---|---|---|---|
| 1 | 0.000 | 0.423 | 0.000000 | 0 | 0 |
| 2 | 0.423 | 0.578 | −0.007761 | +10 | +6 |
| 3 | 0.578 | 0.732 | −0.015523 | +20 | +12 |
| 4 | 0.732 | 1.170 | −0.023284 | +30 | +18 |
| 5 | 0.170 | 1.238 | −0.015523 | +20 | +12 |
| 6 | 1.238 | 1.287 | −0.007761 | +10 | +6 |
| 7 | 1.287 | 1.356 | 0 | 0 | 0 |
| 8 | 1.356 | 1.569 | +0.007761 | −10 | −6 |
| 9 | 1.569 | 1.654 | 0 | 0 | 0 |
| 10 | 1.654 | 1.687 | −0.015523 | 20 | 12 |
| 11 | 1.687 | 1.700 | −0.031046 | 40 | 24 |
| 12 | 1.700 | 1.730 | −0.046569 | 60 | 36 |

The incident surface (the first surface) of the aberration correcting element is shaped in an aspheric surface, which is divided into first area AREA1 within a range of 0.00 mm $\leq$ h < 1.33 mm (h: height from the optical axis) and second area AREA2 within a range of 1.33 mm $\leq$ h, and the wavelength-selective diffractive structure, serving as the first phase structure, is formed in both first area AREA1 and second area AREA2.

The emission surface (the second surface) of the aberration correcting element is also shaped in an aspheric surface, on which steps of an optical-path difference adding structure, serving as the second phase structure, are further formed.

Further, both of the incident surface (the third surface) and the emission surface (the fourth surface) of the light converging element are shaped in aspheric surfaces without forming any phase structure on them.

Each of the aspheric surfaces, including the incident surface (the first surface) and the emission surface (the second surface) of the aberration correcting element and the incident surface (the third surface) and the emission surface (the fourth surface) of the light converging element, is defined by the aforementioned Equation 1 in which the corresponding coefficients indicated in Table 7 are substituted for the numerical symbols, and is axial symmetry with respect to the optical axis.

Further, the first phase structure is represented by the optical path difference to be added to the transmission wave front by this structure. Such the optical path difference is represented by optical path difference function $\phi_b$ (mm) that is defined by the aforementioned Equation 2 in which the corresponding coefficients indicated in Table 7 are substituted for the numerical symbols.

Still further, the ratio P1/P2 between paraxial power P1 (mm$^{-1}$) of the aberration correcting element for the first laser beam and paraxial power P2 (mm$^{-1}$) of the light converging element for the first laser beam becomes 0.00.

Still further, the depth of each step of the different-order diffractive structure of first area AREA1 is established at such a value that the diffraction efficiency of +2 order diffracted light ray becomes the maximum for wavelength $\lambda 1$ of the first laser beam, while the diffraction efficiency of +1 order diffracted light ray becomes the maximum for wavelength $\lambda 2$ of the second laser beam. Yet further, the depth of each step of second area AREA2 is established at such a value that the diffraction efficiency of +2 order diffracted light ray becomes the maximum for wavelength $\lambda 1$.

Still further, each step of the optical-path difference adding structure, serving as a second phase structure formed on the second surface, is established so as to fulfill the aforementioned Equation 3 for wavelength $\lambda 1$ and wavelength $\lambda 2$, and substantially, generates no phase difference. In example 7, twelve ring-shaped zones are formed.

In the objective optical system embodied in the present invention, when an amount of the wavelength change of the blue-violet semiconductor laser beam, caused by the mode hopping, is 1 nm, a RMS value of wave front aberration becomes 0.015 $\lambda$RMS. This indicates that the change of the defocusing component, caused by the mode hopping, is desirably compensated for.

Further, when wavelength $\lambda 1$ of the first laser beam increases by 5 nm and wavelength $\lambda 2$ of the second laser beam increases by 20 nm, the RMS values of the wave front aberrations of them (namely, each being total sum of spherical-aberration components in a range being equal to and lower than the ninth order) become -0.035 $\lambda$RMS and -0.063 $\lambda$RMS, respectively. Still further, when the environmental temperature rises by 30 °C, the RMS values of the wave front aberrations of the first laser beam and the second laser beam (namely, each being total sum of spherical-aberration components in a range being equal to and lower than the ninth order) become 0.081 $\lambda$RMS and -0.015 $\lambda$RMS, respectively.

The abovementioned facts indicate that the objective optical system embodied in the present invention has a desirable performance for each of high-density optical disk HD and the DVD.

[EXAMPLE 8]

Table 8 shows lens data of the objective optical system in example 8.

[Table 8 - 1]

[OPTICAL SPECIFICATIONS OF OBJECTIVE OPTICAL SYSTEM]

HD   : NA1=0.85, f1=2.034mm, λ1=405nm, m1=0, t1=0.1mm

DVD  : NA2=0.63, f2=2.094mm, λ2=655nm, m2=0, t2=0.6mm

[NEAR AXIS DATA]

| Surface number | r (mm) | d1 (mm) | d2 (mm) | Nλ1 | Nλ2 | νd | Remarks |
|---|---|---|---|---|---|---|---|
| OBJ | — | ∞ | ∞ | | | | Light source |
| STO | | | | | | | Aperture |
| 1 | *1 | 1.500 | 1.500 | 1.52469 | 1.50651 | 56.5 | Objective optical system |
| 2 | *1 | 0.700 | 0.700 | | | | |
| 3 | 1.030 | 1.100 | 1.100 | 1.56013 | 1.54073 | 56.3 | |
| 4 | ∞ | 0.512 | 0.275 | | | | |
| 5 | ∞ | 0.100 | 0.600 | 1.62230 | 1.57995 | 30.0 | Protective layer |
| 6 | ∞ | | | | | | |

*1: (refer to the table shown below)

[RADIUS OF CURVATURE AT NEAR AXIS OF FIRST SURFACE AND SECOND SURFACE, COEFFICIENT OF ASPHERIC SURFACE, DIFFRACTION ORDER, DEFAULT WAVELENGTH, COEFFICIENT OF OPTICAL-PATH DIFFERENCE FUNCTION]

| | First surface | | Second surface | |
|---|---|---|---|---|
| | AREA1 (0≤h≤1.350) | AREA2 (1.350≤h) | AREA3 (0≤h≤1.050) | AREA4 (1.050≤h) |
| r | 2.377 | 1.9730 | 3.182 | 3.3206 |
| κ | 0.10556 | -0.52869 | 1.1009 | 2.6886 |
| A4 | 1.2120E-2 | 2.0340E-3 | 5.9948E-4 | -1.2744E-3 |
| A6 | 1.1961E-4 | -1.8345E-3 | -1.0193E-2 | 1.3358E-3 |
| A8 | 2.9432E-4 | -1.0364E-3 | -6.5666E-4 | -2.9536E-3 |
| | 3.7000E-4 | -3.6038E-5 | 1.1835E-2 | -8.7568E-4 |
| A10 | 2.5985E-4 | 2.0523E-4 | -5.7873E-3 | — |
| A12 | -8.8365E-5 | -3.8307E-5 | — | — |
| n1/n2 | +2/+1 | +2 | | |
| λB | 390 | 405 | 390 | 405 |
| C2 | -0.012 | -2.6335E-6 | | |
| C4 | 2.7626E-3 | -1.2971E-3 | | |
| C6 | 6.7358E-4 | -5.7636E-4 | | |
| C8 | -3.6926E-5 | -1.8082E-4 | | |
| C10 | 9.0513E-5 | 9.5808E-5 | | |

[Table 8 - 2]

[SECOND SURFACE AREA3: OPTICAL-PATH DIFFERENCE PROVIDING STRUCTURE]

| i | HiS(mm) | HiL(mm) | Mild(mm) | ki1 | ki2 |
|---|---------|---------|-----------|-----|-----|
| 1 | 0 | 0.300 | 0.0000000 | 0 | 0 |
| 2 | 0.300 | 0.448 | -0.003859 | +5 | +3 |
| 3 | 0.448 | 0.607 | -0.007719 | +10 | +6 |
| 4 | 0.607 | 0.798 | -0.011578 | +15 | +9 |
| 5 | 0.798 | 0.878 | -0.007719 | +10 | +6 |
| 6 | 0.878 | 0.925 | -0.003859 | +5 | +3 |
| 7 | 0.925 | 0.105 | 0.000000 | 0 | 0 |

[COEFFICIENTS OF ASPHERIC SURFACE OF THIRD SURFACE]

| | Third surface |
|---|---------------|
| κ | -0.62924 |
| A4 | 2.3747E-2 |
| A6 | 2.2087E-2 |
| A8 | -8.0132E-3 |
| A10 | 2.3279E-3 |

The incident surface (the first surface) of the aberration correcting element is shaped in an aspheric surface, which is divided into first area AREA1 within a range of 0.00 mm ≤ h < 1.35 mm (h: height from the optical axis) and second area AREA2 within a range of 1.35 mm ≤ h, and a different-order diffractive structure, serving as the first phase structure, is formed in both first area AREA1 and second area AREA2.

The emission surface (the second surface) of the aberration correcting element is shaped in an aspheric surface, which is divided into third area AREA3 within a range of 0.00 mm ≤ h < 1.05 mm (h: height from the optical axis) and fourth area AREA4 within a range of 1.05 mm ≤ h, and an optical-path difference adding structure, serving as the second phase structure, is formed in third area AREA3 by adding steps onto the aspheric surface.

Further, the incident surface (the third surface) of the light converging element is shaped in an aspheric surface without forming any phase structure on it, while the emission surface (the fourth surface) of the light converging element is shaped in a flat surface perpendicular to the optical axis without forming any phase structure on it.

Each of the aspheric surfaces, including the incident surface (the first surface) and the emission surface (the second surface) of the aberration correcting element and the incident surface (the third surface) and the emission surface (the fourth surface) of the light converging element, is defined by the aforementioned Equation 1 in which the corresponding coefficients indicated in Table 8 are substituted for the numerical symbols, and is axial symmetry with respect to the optical axis.

Further, the first phase structure is represented by the optical path difference to be added to the transmission wave front by this structure. Such the optical path difference is represented by optical path difference function $\phi_b$ (mm) that is defined by the aforementioned Equation 2 in which the corresponding coefficients indicated in Table 8 are substituted for the numerical symbols.

Still further, the ratio P1/P2 between paraxial power P1 (mm$^{-1}$) of the aberration correcting element for the first laser beam and paraxial power P2 (mm$^{-1}$) of the light converging element for the first laser beam becomes 0.28.

Still further, the depth of each step of the different-order diffractive structure of first area AREA1 is established at such a value that the diffraction efficiency of +2 order diffracted light ray becomes the maximum for wavelength λ1 of the first laser beam, while the diffraction efficiency of +1 order diffracted light ray becomes the maximum for wavelength λ2 of the second laser beam. Yet further, the depth of each step of second area AREA2 is established at such a value that the diffraction efficiency of +2 order diffracted light ray becomes the maximum for wavelength λ1.

Still further, each step of the optical-path difference adding structure, serving as a second phase structure formed on the second surface, is established so as to fulfill the aforementioned Equation 3 for wavelength λ1 and wavelength λ2, and substantially, generates no phase difference. In example 8, seven ring-shaped zones are formed.

In the objective optical system embodied in the present invention, when an amount of the wavelength change of the blue-violet semiconductor laser beam, caused by the mode hopping, is 1 nm, a RMS value of wave front aberration becomes 0.056 λRMS. This indicates that the change of the defocusing component, caused by the mode hopping, is desirably compensated for.

Further, when wavelength λ1 of the first laser beam increases by 5 nm and wavelength λ2 of the second laser beam increases by 20 nm, the RMS values of the wave front aberrations of them (namely, each being total sum of spherical-aberration components in a range being equal to and lower than the ninth order) become -0.030 λRMS and 0.031 λRMS, respectively. Still further, when the environmental temperature rises by 30 °C, the RMS values of the wave front aberrations of the first laser beam and the second laser beam (namely, each being total sum of spherical-aberration components in a range being equal to and lower than the ninth order) become 0.029 λRMS and 0.012 λRMS, respectively.

The abovementioned facts indicate that the objective optical system embodied in the present invention has a desirable performance for each of high-density optical disk HD and the DVD.

[EXAMPLE 9]

Table 9 shows lens data of the objective optical system in example 9.

[Table 9 - 1]

[OPTICAL SPECIFICATIONS OF OBJECTIVE OPTICAL SYSTEM]

HD : NA1=0.85, f1=1.791mm, λ1=405nm, m1=0, t1=0.1mm

DVD : NA2=0.64, f2=1.856mm, λ2=655nm, m2=0, t2=0.6mm

[NEAR AXIS DATA]

| Sur-face number | r (mm) | d1 (mm) | d2 (mm) | Nλ1 | Nλ2 | νd | Remarks |
|---|---|---|---|---|---|---|---|
| OBJ | – | ∞ | ∞ | | | | Light source |
| STO | | 0.500 | 0.500 | | | | Aperture |
| 1 | ∞ | 1.000 | 1.000 | 1.52469 | 1.50650 | 56.5 | Objective optical system |
| 2 | ∞ | 0.500 | 0.500 | | | | |
| 3 | 1.243 | 2.146 | 2.146 | 1.632792 | 1.612380 | 56.3 | |
| 4 | −4.247 | 0.528 | 0.322 | | | | |
| 5 | ∞ | 0.100 | 0.600 | 1.62100 | 1.58115 | 31.0 | Protective layer |
| 6 | ∞ | | | | | | |

[RADIUS OF CURVATURE AT NEAR AXIS OF FIRST SURFACE, COEFFICIENT OF ASPHERIC SURFACE, DIFFRACTION ORDER, DEFAULT WAVELENGTH, COEFFICIENT OF OPTICAL-PATH DIFFERENCE FUNCTION]

| | First surface |
|---|---|
| n1/n2 | 0/+1 |
| λB | 655nm |
| C2 | 0.0100 |
| C4 | −2.5508E−4 |
| C6 | 1.3659E−3 |
| C8 | 2.3752E−4 |
| C10 | −7.9711E−5 |

[Table 9 - 2]

[SECOND SURFACE: OPTICAL-PATH DIFFERENCE PROVIDING STRUCTURE]

| i | His(mm) | HiL(mm) | Mi1d(mm) | ki1 | ki2 |
|---|---------|---------|----------|-----|-----|
| 1 | 0 | 0.230 | 0.000000 | 0 | 0 |
| 2 | 0.230 | 0.990 | +0.003859 | −5 | −3 |
| 3 | 0.990 | 1.416 | 0.000000 | 0 | 0 |
| 4 | 1.416 | 1.500 | +0.003859 | −5 | −3 |

[COEFFICIENTS OF ASPHERIC SURFACES OF THIRD SURFACE AND FORTH SURFACE]

| | Third surface | Fourth surface |
|---|---------------|----------------|
| $\kappa$ | −2.2611 | −24.290 |
| A4 | 1.2112E-1 | 2.3606E-1 |
| A6 | −3.6887E-2 | −3.6918E-1 |
| A8 | 2.7853E-2 | 3.2622E-1 |
| A10 | −1.2646E-2 | −1.7183E-1 |
| A12 | 2.8312E-3 | 4.0529E-2 |
| A14 | 3.5571E-4 | 4.1956E-6 |
| A16 | −2.2445E-4 | 1.0415E-5 |

The incident surface (the first surface) of the aberration correcting element is shaped in a flat surface, which is perpendicular to the optical axis and on which the wavelength-selective diffractive structure, serving as the first phase structure, is formed.

The emission surface (the second surface) of the aberration correcting element is also shaped in a flat surface, which is perpendicular to the optical axis and on which the optical-path difference adding structure, serving as the second phase structure, is formed by adding steps.

Further, the incident surface (the third surface) and the emission surface (the fourth surface) of the light converging element are shaped in aspheric surfaces without forming any phase structure on them.

Each of the aspheric surfaces of the incident surface (the third surface) and the emission surface (the fourth surface) of the light converging element, is defined by the aforementioned Equation 1 in which the corresponding coefficients indicated in Table 9 are substituted for the numerical symbols, and is axial symmetry with respect to the optical axis.

Further, the first phase structure is represented by the optical path difference to be added to the transmission wave front by this structure. Such the optical path difference is represented by optical path difference function $\phi_b$ (mm) that is defined by the aforementioned Equation 2 in which the corresponding coefficients indicated in Table 9 are substituted for the numerical symbols.

Still further, the ratio P1/P2 between paraxial power P1 ($mm^{-1}$) of the aberration correcting element for the first laser beam and paraxial power P2 ($mm^{-1}$) of the light converging element for the first laser beam becomes 0.00.

Still further, each step of the optical-path difference adding structure, serving as a second phase structure formed on the second surface, is established so as to fulfill the aforementioned Equation 3 for wavelength λ1 and wavelength λ2, and substantially, generates no phase difference. In example 9, seven ring-shaped zones are formed.

In example 9, when wavelength λ1 of the first laser beam increases by 5 nm and wavelength λ2 of the second laser beam increases by 20 nm, the RMS values of the wave front aberrations of them (namely, each being total sum of spherical-aberration components in a range being equal to and lower than the ninth order) become 0.014 λRMS and 0.013 λRMS, respectively. Still further, when the environmental temperature rises by 30 °C, the RMS values of the wave front aberrations of the first laser beam and the second laser beam (namely, each being total sum of spherical-aberration components in a range being equal to and lower than the ninth order) become 0.005 λRMS and -0.004 λRMS, respectively.

The abovementioned facts indicate that the objective optical system embodied in the present invention has a desirable performance for each of high-density optical disk HD and the DVD.

Disclosed embodiment can be varied by a skilled person without departing from the spirit and scope of the invention.

**Claims**

1. An objective optical system for use in an optical pickup apparatus, conducting at least one of reproducing and recording information for a first optical disk having a protective layer with a thickness t1 by using a first light flux with a wavelength $\lambda 1$ emitted from a first light source and conducting at least one of reproducing and recording information for a second optical disk having a protective layer with a thickness t2 by using a second light flux with a wavelength $\lambda 2$ emitted from a second light source, comprising:

   an aberration correcting element having at least two phase structures of a first and second phase structures; and
   a light converging element to converge the first light flux emitted from the aberration correcting element onto an information recording plane of the first optical disk and to converge the second light flux emitted from the aberration correcting element onto an information recording plane of the second optical disk;

   wherein the second phase structure refrains at least one of a change in the light converging characteristic of the objective optical system due to a change in the wavelength of the first light flux and a change in the light converging characteristic of the objective optical system due to a change in environmental temperature.

2. The objective optical system of claim 1, wherein the objective optical system satisfies the following formula:

$$-0.05 \leq P1/P2 \leq 0.3$$

   where P1 is the paraxial power ($\text{mm}^{-1}$) of the aberration correcting element for the first light flux and P2 is the paraxial power ($\text{mm}^{-1}$) of the aberration correcting element for the second light flux.

3. The objective optical system of claim 1, wherein the objective optical system satisfies the following formula:

$$0 \leq |\,|m1| - |m2|\,| \leq 0.05$$

   where m1 is the magnification of the objective optical system when conducting at least one of reproducing and recording information for the first optical disk and m2 is the magnification of the objective optical system when conducting at least one of reproducing and recording information for the second optical disk.

4. The objective optical system of claim 1, wherein the first phase structure corrects a spherical aberration caused by a difference between the thickness t1 and the thickness t2.

5. The objective optical system of claim 1, wherein the first phase structure corrects a spherical aberration caused by a difference between the wavelength of the first light flux coming into the first phase structure and the wavelength of the second light coming into the first phase structure.

6. The objective optical system of claim 1, wherein the first phase structure and the second phase structure are one of a wavelength selecting type diffractive structure, a optical path difference providing structure and a difference order diffractive structure,
   wherein the wavelength selecting type diffractive structure has a plurality of concentric ring-shaped zones each of which is separated with steps discontinuing in the optical path direction to form a stair and the wavelength selecting type diffractive structure substantially does not provide a phase difference for the first light flux and substantially provides a phase difference for the second light flux,
   wherein the optical path difference providing structure has a plurality of concentric ring-shaped zones separated with steps discontinuing in the optical path direction, and
   wherein the difference order diffractive structure has a plurality of concentric ring-shaped zones and satisfies the following formula:

$$n1 > n2$$

   where n1 is a diffraction order of a diffracted light ray having the maximum diffraction efficiency among diffracted light rays generated when the first light flux comes in and n2 is a diffraction order of a diffracted light ray having the maximum diffraction efficiency among diffracted light rays generated when the second light flux comes.

7. The objective optical system of claim 4, wherein the aberration correcting element is a plastic lens and the light converging element is a glass lens and the paraxial powers P1 and P2 satisfy the following formula:

$$-0.05 \leq P1/P2 \leq 0.05$$

8. The objective optical system of claim 7, wherein the light converging element has a refractive index of 1.6 or more for the first light flux with the wavelength $\lambda 1$.

9. The objective optical system of claim 4, wherein each of the aberration correcting element and the light converging element is a plastic lens and the paraxial powers P1 and P2 satisfy the following formula:

$$0.03 \leq P1/P2 \leq 0.30$$

10. The objective optical system of claim 9, wherein the first phase structure is the difference order diffractive structure and the second phase structure is the optical path difference providing structure and the paraxial powers P1 and P2 satisfy the following formula:

$$0.08 \leq P1/P2 \leq 0.1$$

11. The objective optical system of claim 9, wherein the first phase structure is the difference order diffractive structure and the second phase structure is the difference order diffractive structure and the paraxial powers P1 and P2 satisfy the following formula:

$$0.07 \leq P1/P2 \leq 0.1$$

12. The objective optical system of claim 9, wherein the first phase structure is the wavelength selecting type diffractive structure and the second phase structure is the optical path difference providing structure and the paraxial powers P1 and P2 satisfy the following formula:

$$0.07 \leq P1/P2 \leq 0.1$$

13. The objective optical system of claim 9, wherein the first phase structure is the wavelength selecting type diffractive structure and the second phase structure is the difference order diffractive structure and the paraxial powers P1 and P2 satisfy the following formula:

$$0.07 \leq P1/P2 \leq 0.1$$

14. The objective optical system of claim 1, wherein the aberration correcting element and the light converging element are integrated into one body.

15. An optical pickup apparatus, comprising:

the objective optical system described in claim 1.

16. An optical information recording reproducing apparatus, comprising:

the optical pickup apparatus described in claim 15.

# FIG. 1 ( a )

DOE 100 100 100 100 100 100

d

OPTICAL AXIS

# FIG. 1 ( b )

DOE 100 100 100 100

d

OPTICAL AXIS

# FIG. 2 ( a )

101
101
101
101
102
102
102
102
102

d

DOE

OPTICAL AXIS

# FIG. 2 ( b )

101
101
101
101
101
102
102
102
102
102

DOE

d

OPTICAL AXIS

# FIG. 3 ( a )

103  103  103

HOE

d

OPTICAL AXIS

# FIG. 3 ( b )

103  103  103

HOE

d

OPTICAL AXIS

FIG. 4 ( a )

104 104 104 104 104 104

DOE / NPS

105 105 105 105 105 105 105 d

OPTICAL AXIS

FIG. 4 ( b )

104 104 104 104 104

DOE / NPS

105 105 d

OPTICAL AXIS

FIG. 5

EP 1 580 737 A2

FIG. 6

# FIG. 7

A1 : WAVE FRONT ABERRATION ONLY WITH DIFFERENT-ORDER DIFFRACTIVE STRUCTURE

A2 : WAVE FRONT ABERRATION ONLY WITH OPTICAL-PATH DIFFERENCE PROVIDING STRUCTURE

A3 : WAVE FRONT ABERRATION WITH COMBINED STRUCTURE OF DIFFERENT-ORDER DIFFRACTIVE STRUCTURE AND OPTICAL-PATH DIFFERENCE PROVIDING STRUCTURE